# EUROPEAN PATENT APPLICATION

(11) **EP 4 775 408 A1**
(43) Date of publication of application: **15.07.2026**
(21) Application number: 26150457.5
(22) Date of filing: 07.01.2026
(51) Int. Cl.: B60B 11/02, A47B 3/00, A47B 13/00, A47B 31/04, B62B 1/12

(54) **OUTDOOR PORTABLE DEVICE**

(30) Priority: 08.01.2025 CN 202520043245 U; 08.01.2025 CN 202520043706 U; 18.02.2025 CN 202520259785 U; 18.02.2025 CN 202520259326 U
(71) Applicant: Anker Innovations Technology Co., Ltd., Changsha, Hunan 410221 (CN)
(72) Inventor: PENG, Jinling, Changsha City, 410221 (CN); OU, Qizhen, Changsha City, 410221 (CN); ZHUANG, Jiali, Changsha City, 410221 (CN); ZHAO, Jianwei, Changsha City, 410221 (CN)
(74) Representative: De Arpe Tejero, Manuel

(57) **Abstract**

An outdoor portable device (100a) includes: a device body; and a wheel assembly (200a, 300a), connected to the device body and configured to drive the device body to move; and an external attachment assembly (100c), mounted at an exterior of the device body and connected to the device body, wherein, the external attachment assembly is configured to hold at least one outdoor tool.

## Description

### TECHNICAL FIELD

Embodiments of the present disclosure relate to the technical field of outdoor portable devices, and more specifically, to an outdoor portable device.

### BACKGROUND

To meet needs of outdoor activities, such as camping, working, and emergency preparedness, portable devices, such as a refrigerator, an air conditioner, and a power supply, may need to be used. It may be required to provide an outdoor portable device that can be transported more easily and may be applied to a wider range of scenarios.

### SUMMARY

The present disclosure provides an outdoor portable device, including: a device body; and a wheel assembly, connected to the device body and configured to drive the device body to move; and an external attachment assembly, mounted at an exterior of the device body and connected to the device body, wherein, the external attachment assembly is configured to hold at least one outdoor tool.

### BRIEF DESCRIPTION OF THE DRAWINGS

FIG. 1 is a structural schematic view of a portable device according to an embodiment of the present disclosure.
FIG. 2 is a structural schematic view of a bracket according to an embodiment of the present disclosure.
FIG. 3 is a structural schematic view of a first wheel according to an embodiment of the present disclosure.
FIG. 4 is a structural schematic view of a polyurethane foam wheel according to an embodiment of the present disclosure.
FIG. 5 is a schematic view of engagement between a first insertion portion and a second wheel hub according to an embodiment of the present disclosure.
FIG. 6 is a schematic view of a second wheel hub according to an embodiment of the present disclosure.
FIG. 7 is a schematic view of an end cap according to an embodiment of the present disclosure.
FIG. 8 is a schematic view of a groove according to an embodiment of the present disclosure.
FIG. 9 is an exploded view of an outdoor refrigerator according to an embodiment of the present disclosure.
FIG. 10 is an exploded view of a portion of the outdoor refrigerator shown in FIG. 9.
FIG. 11 is a perspective view of a foldable storage basket in the outdoor refrigerator shown in FIG. 9, according to a first embodiment of the present disclosure.
FIG. 12 is a perspective view of a bottom frame stacked with a first side frame of the foldable storage basket shown in FIG. 11.
FIG. 13 is a perspective view of the foldable storage basket shown in FIG. 11 in a fully folded state.
FIG. 14 is a plan view of the foldable storage basket shown in FIG. 11 in a fully unfolded state.
FIG. 15 is a plan view of the foldable storage basket shown in FIG. 11 in the fully folded state.
FIG. 16 is a perspective view of the foldable storage basket of the outdoor refrigerator shown in FIG. 9 according to a second embodiment of the present disclosure.
FIG. 17 is a perspective view of the foldable storage basket shown in FIG. 16 when the bottom frame is stacked with the first side frame.
FIG. 18 is a perspective view of the foldable storage basket shown in FIG. 16 in the fully folded state.
FIG. 19 is a plan view of the foldable storage basket shown in FIG. 16 in a fully unfolded state.
FIG. 20 is a plan view of the foldable storage basket shown in FIG. 16 in the fully folded state.
FIG. 21 is a structural schematic view of an outdoor portable device according to an embodiment of the present disclosure.
FIG. 22 is a structural schematic view of a table plate connected to the outdoor portable device according to an embodiment of the present disclosure.
FIG. 23 is a structural schematic view of a knife holder and a fishing rod holder connected to the outdoor portable device according to an embodiment of the present disclosure.
FIG. 24 is a structural schematic view of the outdoor portable device connected to a device according to an embodiment of the present disclosure.
FIG. 25 is a structural schematic view of a hanging attachment member and a rotation assembly according to an embodiment of the present disclosure.
FIG. 26 is a schematic view of a cup holder according to an embodiment of the present disclosure.
FIG. 27 is a schematic view of a bottom of the cup holder according to an embodiment of the present disclosure.
FIG. 28 is a structural schematic view of a first housing according to an embodiment of the present disclosure.
FIG. 29 is a structural schematic view of the knife holder according to an embodiment of the present disclosure.
FIG. 30 is a structural schematic view of the fishing rod holder according to an embodiment of the present disclosure.
FIG. 31 is a structural schematic view of a third housing according to an embodiment of the present disclosure.
FIG. 32 is a structural schematic view of the table plate according to an embodiment of the present disclosure.
FIG. 33 is a perspective view of the outdoor device, when a plurality of outdoor portable tables are fully unfolded, according to an embodiment of the present disclosure.
FIG. 34 is an exploded view of a portion of the outdoor device shown in FIG. 33.
FIG. 35 is a perspective view of the outdoor portable table shown in FIG. 33 in a fully unfolded state.
FIG. 36 is a perspective view of the outdoor portable table shown in FIG. 35, being viewed from another viewing angle.
FIG. 37 is a perspective view of the outdoor portable table shown in FIG. 35 in the fully folded state.
FIG. 38 is an exploded view of the outdoor portable table shown in FIG. 37.
FIG. 39 is a perspective view of the outdoor portable table shown in FIG. 38, being viewed from another viewing angle.

### DETAILED DESCRIPTIONS

To make the objectives, features, and advantages of the present disclosure more apparent and understandable, specific embodiments of the present disclosure are described in detail below by referring to the accompanying drawings. Various specific details are described in the following description to facilitate thorough understanding of the present disclosure. However, the present disclosure may be implemented in various other ways different from those described herein, and any ordinary skilled artisan may make similar improvements without departing from the spirit and scope of the present disclosure. Therefore, the present disclosure is not limited to the specific embodiments disclosed below.

In the description of the present disclosure, it should be understood that, when terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and so on are used, the terms may indicate directions or positions relative to an orientation shown in the drawings. These terms are used solely for the purpose of facilitating description of the present disclosure and simplifying the description. The terms are not intended to indicate or imply that a device or an element must have a specific orientation, be constructed in a specific orientation, or operate in a specific orientation. Therefore, the terms shall not be interpreted as limiting the scope of the present disclosure.

Furthermore, terms "first" and "second" are used for descriptive purposes only and shall not be interpreted as indicating or implying relative importance or implying the number of technical features indicated. Therefore, features defined as "first" or "second" may explicitly or implicitly include at least one such feature. In the description of the present disclosure, the term "a plurality of" means at least two, such as two, three, and so on, unless otherwise explicitly and specifically defined.

In the present disclosure, unless otherwise explicitly defined and limited, terms such as "mounted," "connected," "coupled," and "fixed" shall be interpreted broadly. For example, connection may be fixed connection, removable connection, or an integrally-formed structure; pr mechanical connection or electrical connection; or direct connection or indirect connection via an intermediate medium; or internal communication between two components or an interactive relationship between two components, unless otherwise explicitly specified. Any ordinary skilled artisan shall understand the specific meaning of the terms in the present disclosure based on particular contexts.

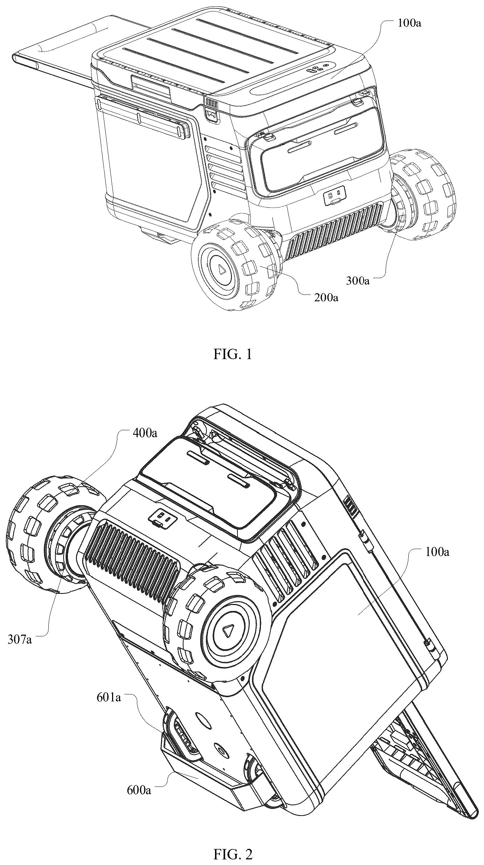

As shown in FIGS. 1-8, a portable device is provided.

As shown in FIGS. 1, 3, and 6, the present embodiment provides a wheel assembly for the portable device. The wheel assembly may include a first wheel 200a and a second wheel 300a. The first wheel 200a may include a first wheel hub 201a, a connection member 202a, and a first tire 203a. The first wheel hub 201a is arranged with at least one first mounting hole that is arranged along an axial direction of the first wheel hub 201a. The second wheel 300a may include a second wheel hub 301a and a second tire 307a. The second tire 307a sleeves around an exterior of the second wheel hub 301a. The second wheel hub 301a is arranged with at least one second mounting hole that is arranged along an axial direction of the second wheel hub 202a. The at least one first mounting hole may be in one-to-one correspondence with the at least one second mounting hole. The connection member 202a may detachably connect the first wheel hub 201a to the second wheel hub 301a through the first mounting hole and the second mounting hole. A diameter of the first tire 203a may be greater than a diameter of the second tire 307a. A ground contact area of the first tire 203a may be larger than a ground contact area of the second tire 307a. When the first wheel hub 201a is connected to the second wheel hub 301a the first tire 203a may contact the ground. When the first wheel hub 201a and the second wheel hub 301a are disconnected from each other, the second tire 307a may contact the ground.

Specifically, when moving on a relatively flat ground, only the second wheel 300a, which may have the smaller ground contact area and the smaller diameter, may need to be operating. When moving on a deteriorate road or and on an uneven ground, the first wheel 200a and the second wheel 300a may be assembled to each other. The first wheel 200a, which may have the larger diameter and the larger ground contact area, may directly act on the ground. The first wheel 200a may be in an operating state to replace the second wheel 300a to drive the portable device with the wheel assembly to move. At this moment, the second wheel 300a may be suspended above the ground.

Specifically, the connection member 202a may enable detachable connection between the first wheel hub 201a and the second wheel hub 301a.

Specifically, the second wheel 300a may be an original component of the portable device 100a. For indoor use or moving on level surfaces, the second wheel hub 301a and the second tire 307a may be used for operating. When moving outdoors on complex terrain, the tire having a larger contact surface may be needed, the first wheel 200a may be added to the second wheel 300a, and the first wheel hub 201a and first tire 203a may be used for operating.

Specifically, the first wheel 200a may be mounted on the second wheel 300a. When the first wheel 200a needs to be used, the second wheel 300a may not be disassembled to have only the first wheel 200a on the portable device. In this way, an efficiency of mounting and disassembling the first wheel 200a may be improved.

It should be noted that a fixation screw 302a at a center of the second wheel hub 301a may be connected to a connection rod between two second wheels 300a of the portable device 100a. In some embodiments, the number of the at least one first mounting hole may be three, and the number of the at least one second mounting hole may be three. The second mounting holes may be uniformly distributed around the fixation screw 302a. Positions at which the first mounting holes are arranged may be aligned with positions at which the second mounting holes are arranged. Specifically, the three first mounting holes may be distributed to form an equilateral triangle, and a center of the equilateral triangle may coincide with an axial center of the first wheel hub. A depth of each of the first mounting holes is extending along the axial direction of the first wheel hub. The three second mounting holes may be distributed to form another equilateral triangle, and a center of the another equilateral triangle may coincide with an axial center of the second wheel hub. A depth of each of the second mounting holes is extending along the axial direction of the second wheel hub.

For the wheel assembly of the portable device of the present disclosure, when the portable device 100a is to be used on special road surfaces, the connection member 202a may be used to connect the first wheel hub 201a with the second wheel hub 301a. In this way, the first wheel 200a may be mounted at an exterior of the second wheel 300a. Since the diameter of the first tire 203a is larger than that of the second tire 307a, the first wheel 200a may replace the second wheel 300a to drive the portable device 100a to move. Since the ground contact area of the first tire 203a is larger than that of the second tire 307a, the first wheel 200a may be used to move on various special road surfaces, enabling the portable device to move outdoors. Simultaneously, since the first wheel 200a and the second wheel 300a are detachably connected to each other via the connection member 202a, storage may be easily achieved, a space occupied by the portable device 100a may be reduced.

The connection member 202a may include a captive screw. The captive screw may include a threaded end and a smooth shaft end. A side wall of the first mounting hole may include a threaded structure, and a side wall of the second mounting hole may include an embedded nut 303a. The threaded end may be engaged with both the threaded structure and the embedded nut, and the smooth shaft end may be connected to a handle 208a.

Specifically, the first mounting hole may be a through hole. The captive screw may be engaged with the threaded structure to prevent loosening and loss, facilitating mounting of the first wheel hub 201a.

Specifically, in order to reduce a self-weight of the second wheel 300a, an interior of the second wheel hub 301a may be hollow. The second mounting hole may be a hollow cylinder. The embedded nut 303a may be arranged inside the second mounting hole. The embedded nut 303a may be integrally formed with the second wheel hub 301a to enhance a shear resistance of the second wheel 300a so as to improve structural stability of the second wheel 300a.

While in use, an operator may align the first wheel hub 201a with the second wheel hub 301a, insert the captive screw into the embedded nut 303a, and rotate the captive screw to engage the captive screw with the first mounting hole and the embedded nut 303a in the second mounting hole. In this way, secure connection between the first wheel hub 201a and the second wheel hub 301a may be achieved.

By arranging the captive screw, the connection member 202a may be prevented from loosening or being detached off during use, a mounting and disassembling process may be simplified, and an operation efficiency may be improved.

Furthermore, the operator may design any anti-loosening mechanism as needed, such as a spring washer or a locking plate, and so on, so as to further prevent the connection member 202a from being loosened due to vibration during use.

The captive screw may include the threaded end and the smooth shaft end. The threaded end may be engaged with the embedded nut 303a and the threaded structure, and the smooth shaft end may be connected to the handle 208a.

Specifically, the threaded end may be engaged with the threaded structure and the embedded nut 303a to achieve secure fastening.

While in use, when mounting the first wheel 200a, the smooth shaft end may move vertically along the threaded structure to facilitate the first wheel 200a to be assembled onto the second wheel 300a. After aligning the first mounting hole with the second mounting hole, the operator may rotate the handle 208a to rotate the captive screw, enabling secure connection between the first wheel hub 201a and the second wheel hub 301a.

The handle 208a may enable the operator to rotate the connection member 202a more easily. By arranging the smooth shaft end and the threaded end, precise alignment and connection between the first mounting hole and the second mounting hole may be achieved easily, such that the captive screw may be arranged more stably during use and may be prevented from being loosened.

It should be noted that since the first wheel 200a may need to replace the second wheel 300a for the portable device to move in various complex outdoor terrains, a material of the first tire 203a of the first wheel 200a may be more wear-resistant and tear-resistant. In some embodiments, the first wheel hub 201a may be a plastic wheel hub. The first tire 203a may be made of rubber. When moving the portable device 100a, an outer tire surface of the first wheel 200a may be relatively soft and may have a relatively large ground contact area, such that a cushioning effect may be achieved, a mobility efficiency may be improved, and the portable device 100a may be applicable for various specialized road surfaces.

In some embodiments, the first wheel 200a may be an inflatable wheel. The first tire 203a may include an inner tube and an outer tire. The inner tube may be connected to the first wheel hub 201a, and the outer tire sleeves an exterior of the inner tube. The first wheel 200a may further include an inflation nozzle 204a, and the inflation nozzle 204a may be inserted into the first wheel hub 201a. An end of the inflation nozzle 204a may protrude out of an outer surface of the first wheel hub 201a, and the other end of the inflation nozzle 204a may be communicated with the inner tube. Alternatively, the first wheel 200a may be an integrally molded foam wheel.

Specifically, the first tire 203a may be configured as a composite structure formed by the inner tube and the outer tire, and the inflation nozzle 204a may be configured to inflate the inner tube.

Specifically, the first wheel hub 201a may define a hole for mounting the inflation nozzle 204a. When the inflation nozzle 204a is inserted into the hole, the inflation nozzle 204a may be communicated to the inner tube from a lateral side of the first wheel hub 201a. The operator may sleeve the outer tire on the exterior of the inner tube and first wheel hub 201a, compress and align the outer tire with the inner tube, and connects the connection member 202a to the first wheel hub 201a.

During use, the operator may firstly check a tire pressure of the first tire 203a. When the tire pressure is relatively low, the operator may inflate the first tire 203a through the inflation nozzle 204a using a pump and then assemble the first wheel 200a. In this way, a more stable tire structure may be provided for the first wheel 200a, durability and a load-bearing capacity of the first tire 203a may be improved. The inflation nozzle 204a may enable the user to conveniently adjust the tire pressure of the first tire 203a to suit various road conditions, facilitating the wheel to move outdoors.

Furthermore, the first tire 203a may be a tire without any inner tube, i.e., a fully pneumatic tire. By improving sealing performance of a tire wall, stability and durability of the first tire 203a may be improved.

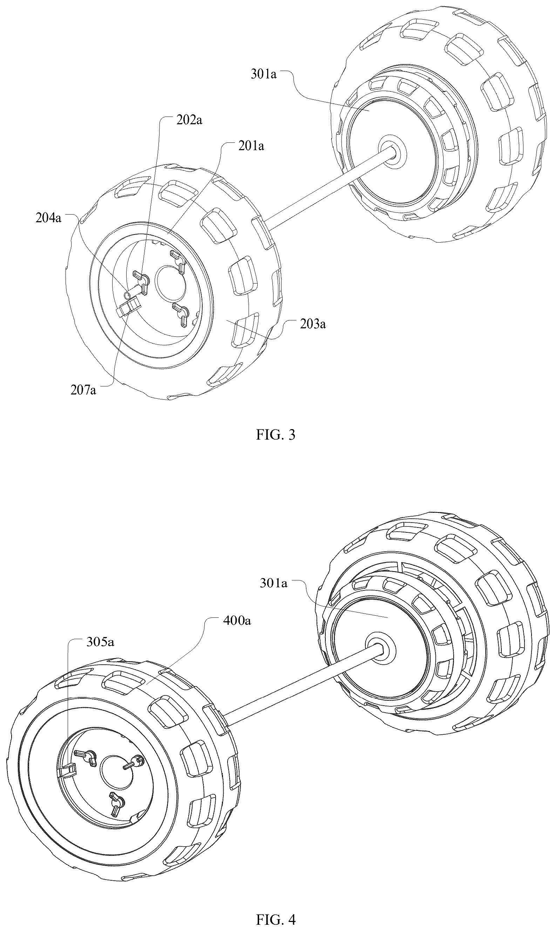

As shown in FIG. 4, in some embodiments, hardness of the first wheel 200a may be lower than that of the second wheel 300a. In some embodiments, the first wheel 200a may be a polyurethane foam wheel 400a, i.e., the material of the first wheel 200a may be polyurethane foam.

Specifically, the polyurethane foam may have excellent elasticity and wear resistance, providing stable support and cushioning effects. In addition, the tire pressure of the polyurethane foam wheel 400a may not need to be checked, and inflation of the polyurethane foam wheel 400a may be omitted. Therefore, the inflation nozzle 204a may be omitted, and a structure of the first tire 203a may be simplified.

During use, the tire pressure may not need to be checked. The operator may align the connection member 202a of the polyurethane foam wheel 400a with the second mounting hole for mounting. By using the polyurethane foam, the tire may be lighter in weight, more durable, and applicable for various complex road conditions, and the tire may be assembled more easily.

To optimize the above technical solution, the first wheel hub 201a and the first tire 203a may be integrally formed as a one-piece structure. A production process may be simplified, the number of components may be reduced, production costs may be reduced, and overall performance and structural strength of the product may be improved.

It should be noted that, in order to improve the mounting efficiency of the first wheel 200a, a guide member may be arranged to guide the mounting. A specific structure of the guide member may be as follows.

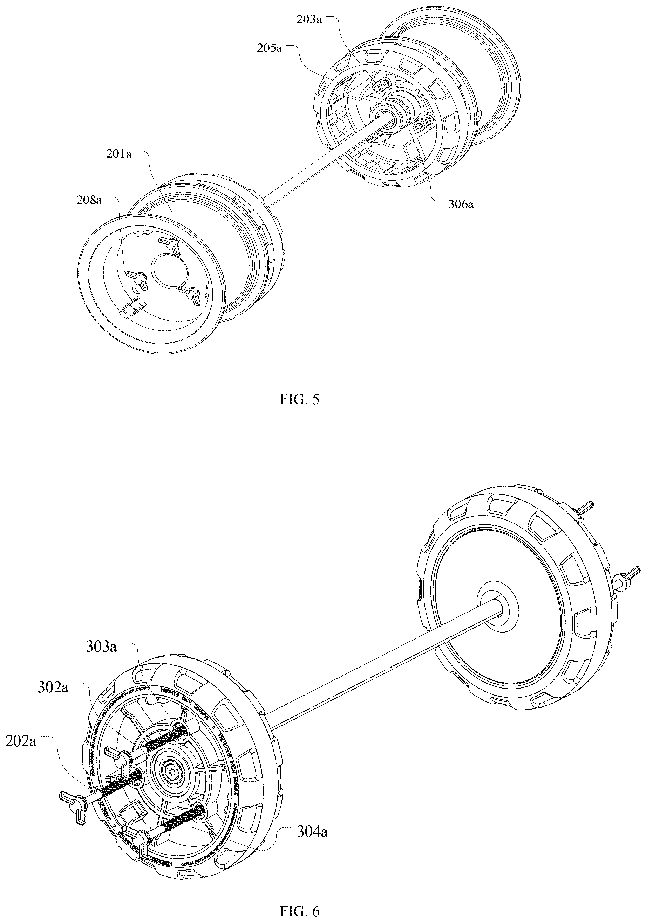

As shown in FIG. 5, in order to optimize the above technical solution, at least one first insertion portion 205a may be arranged on a side of the first wheel hub 201a facing the second wheel hub 301a. At least one second insertion portion 304a may be arranged on a side of the second wheel hub 301a facing the first wheel hub 201a. The first insertion portion 205a and the second insertion portion 304a are connected to each other by insertion.

Specifically, in order to reduce the self-weight of the second wheel 300a, the second wheel hub 301a may have a hollow interior, and a partition rib 306 may be arranged in the interior of the second wheel hub 301a. The second wheel hub 301a may support the second wheel 300a and may divide the interior of the second wheel hub 301a into a plurality of cavities. Each of the plurality of cavities may serve as one second insertion portion 304a.

While in use, the operator may move the first wheel 200a toward the second wheel 300a, align the first insertion portion 205a with the second insertion portion 304a, and align the first mounting hole with the second mounting hole, until the connection member 202a is engaged with the second mounting hole. At this moment, the first insertion portion 205a may be inserted into the second insertion portion 304a, such that assembling the first wheel 200a onto the second wheel 300a may be completed.

By arranging the first insertion portion 205a and the second insertion portion 304a, the first wheel 200a may be connected more conveniently, and an assembling and disassembling efficiency of the first wheel 200a may be improved. Furthermore, the first insertion portion 205a and the second insertion portion 304a may enable the connection between the first wheel 200a and the second wheel 300a to be more secured, potential loosening or detachment while moving may be avoided, and the portable device may be more suitable to be used outdoors

Furthermore, the first insertion portion 205a and the second insertion portion 304a may be configured as magnetic insertion. Rapid connection and secure fixation between the first insertion portion 205a and the second insertion portion 304a may be achieved via a magnetic force.

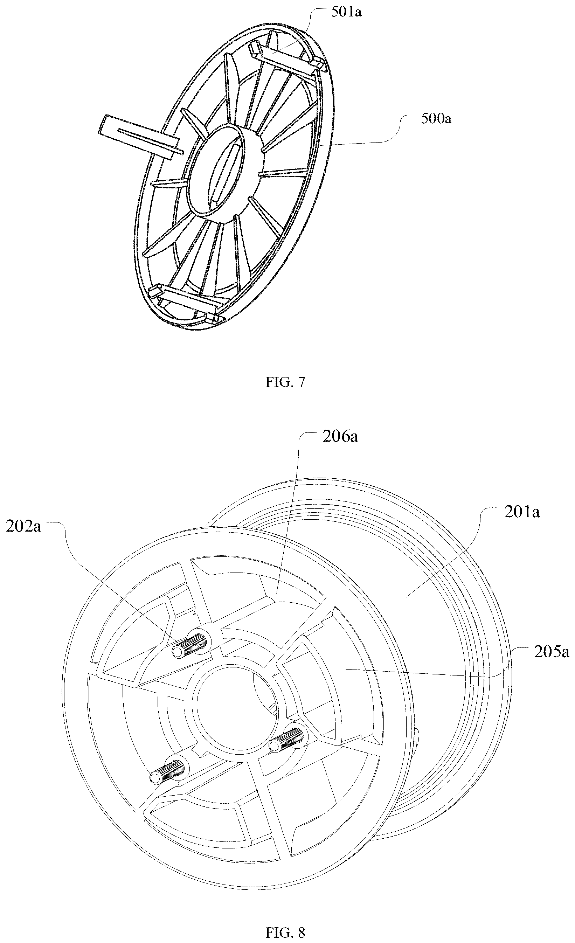

As shown in FIG. 8, in order to optimize the above technical solution, a plurality of grooves 206a may be defined in the side of the first wheel hub 201a facing the second wheel hub 301a. The at least one first insertion portion 205a may be arranged within one of the plurality of groove 206a and may protrude from a bottom of the groove 206a. The side of the second wheel hub 301a facing the first wheel hub 201a may be arranged with the plurality of partition ribs 306 extending along the axial direction of the second wheel hub 301a. The second insertion portion 304a may be the cavities enclosed by the plurality of partition ribs 306.

Specifically, in order to reduce the self-weight of the first wheel 200a, the plurality of grooves 206a may be defined in a first side of the first wheel hub 201a, and the first insertion portion 205a may be a hollow structure. In some embodiments, three first insertion portions 205a and three second insertion portions 304a may be arranged and may be uniformly distributed around the fixation screw 302a.

Specifically, one or more first insertion portions 205a may be arranged in the groove 206a, positions and quantities of the one or more first insertion portions 205a may be determined according to application requirements.

Specifically, when the second mounting hole is configured as the hollow cylinder, the second mounting hole may be defined in a groove wall of the groove 206a, and the second mounting hole may be misaligned with the first insertion portion 205a. In order to ensure the structural strength of the second mounting hole and the plurality of grooves 206a, reinforcing ribs may be arranged between the groove wall of the groove 206a in which the second mounting hole is defined and a groove wall of another groove 206a adjacent to the groove 206a.

Specifically, the first insertion portion 205a and the groove 206a may be integrally formed as a one-piece structure.

Specifically, positions of the grooves 206a correspond to positions of the cavities to further enhance stability of the insertion between the first wheel 200a and the second wheel 300a.

In this way, connection between the first insertion portion 205a and the second insertion portion 304a may be configured in a more concealed manner, overall aesthetics of the first wheel 200a may be improved, additional support and stability may be provided, and strength of the connection between the first wheel hub 201a and the second wheel hub 301a may be improved.

As shown in FIG. 7, in order to optimize the above technical solution, the wheel assembly may further include an end cap 500a. The end cap 500a may be arranged with a snap-fit portion 501a. A first connection portion 207a may be arranged on the side of the first wheel hub 201a facing away from the second wheel hub 301a. A second connection portion 305a may be arranged on the side of the second wheel hub 301a facing the first wheel hub 201a. When assembling the first wheel 200a to the second wheel 300a, the snap-fit portion 501a may be connected with the first connection portion 207a. When disassembling the first wheel 200a off from the second wheel 300a, the snap-fit portion 501a may be connected with the second connection portion 305a.

It should be noted that the end cap 500a may be shared for both the first wheel 200a and the second wheel 300a. Initially, the end cap 500a may be connected to the second wheel hub 301a of the second wheel 300a, and that is, the snap-fit portion 501a may be connected to the second connection portion 305a. When the first wheel 200a needs to be assembled, the operator may detach the end cap 500a off from the second wheel 300a, assemble the first wheel 200a onto the second wheel 300a, and then connect the end cap 500a to the first wheel hub 201a, and in this way, the snap-fit portion 501a may be switched to be connected with the first connection portion 207a.

Specifically, the snap-fit portion 501a may be an insertion rod extending in a direction perpendicular to the end cap 500a. A first end of the snap-fit portion 501a may be connected to the end cap 500a, and a second end of the snap-fit portion 501a may extend toward the first wheel hub 201a. A hook may be configured at the second end to be snap-fitted with either the first connection portion 207a or the second connection portion 305a.

Specifically, three insertion rods may be arranged, six grooves 206a may be defined, six cavities may be formed, three first connection portions 207a may be arranged, and three second connection portions 305a may be arranged.

Specifically, in some embodiments, the first connection portions 207a and the first insertion portions 205a in the plurality of grooves 206a may be alternately arranged, and the second connection portions 305a and the second insertion portions 304a may be alternately arranged. In this way, forces may be uniformly distributed on the first wheel hub 201a and the second wheel hub 301a, and structural strength may be ensured.

Specifically, a support rib may be arranged between the insertion rod and the end cap 500a. The support rib may ensure stability of the insertion connection between the insertion rod and either the first connection portion 207a or the second connection portion 305a.

Specifically, the first connection portion 207a and the second connection portion 305a may have identical configuration. The second connection portion 305a may include a guide plate and a snap-fit plate. The insertion rod may be inserted in the guide plate, and the guide plate may guide movement of the insertion rod. The snap-fit plate may be snap-fit with the second end (the hook) of the insertion rod.

The end cap 500a may ensure structural integrity and aesthetics of the first wheel 200a and may provide support and stability. Engagement between the snap-fit portion 501a and either the first connection portion 207a or the second connection portion 305a ensures the connection between the end cap 500a and both the first wheel hub 201a and the second wheel hub 301a to be more secured.

In summary, in the present disclosure, the first wheel 200a may be detachable, so as to enable the portable device 100a to move flexibly and stably across various road conditions. The indoor space occupied by the device may be minimized, such that product utility and user experience may be improved.

The present disclosure further provides a portable device 100a including a device body and the wheel assembly as described in any of the above embodiments. The first wheel 200a and the second wheel 300a may be detachably connected to each other, and the wheel assembly may be connected to the device body to move the device body of the portable device 100a.

The portable device 100a may be a mobile energy storage device or other outdoor portable device such as an outdoor refrigerator.

As shown in FIG. 2, in order to optimize the above technical solution, the portable device 100a may include two sets of wheel assemblies. Second wheels 300a of the two sets of wheel assemblies may be arranged opposite to each other and arranged at one side of the device body. The device body may include two connection holes 601a that are opposite to each other, and the two connection holes 601a may be located on a side of the device body 100a opposite to the wheel assemblies. The wheel assemblies may further include a bracket 600a, and two ends of the bracket 600a may be respectively engaged or rotatably connected to the two connection holes 601a. Each first wheel 200a of the wheel assemblies may be connected to a respective one of the second wheels 300a of the wheel assemblies. When the bracket 600a is connected to the connection holes 601a, the portable device is placed horizontally.

Specifically, when the portable device 100a includes the two sets of wheel assemblies, two second wheels 300a may be connected to each other via a rotation shaft or may be unconnected to each other, which will not be limited herein.

Specifically, the bracket may be U-shaped.

Specifically, the two ends of the bracket 600a may be connected to the two connection holes 601a via snap-fit structures such as slots or clips. Alternatively, the two ends of the bracket 600a may be rotatably connected to the two connection holes 601a via structures such as a rotation shaft. In addition to the snap-fit and rotatable connection, the bracket 600a may be connected to the connection holes 601a of portable device 100a in a telescopic manner or via hinged structures. Specific structures for achieving the connection may be determined according to practical requirements and will not be limited herein.

Specifically, after connecting the bracket 600a to the connection holes 601a, a distance from a bottom of the bracket 600a to a top of portable device 100a may be equal to a distance from a bottom of the first wheel 200a to the top of the portable device 100a. In this way, the portable device 100a may be placed horizontally when not moving.

Specifically, each connection hole 601a of the portable device 100a may be configured as an insertable handle 208a. Each of two ends of the bracket 600a may be respectively snapped into the insertable handle 208a to form a stable connection.

While in use, when the portable device 100a reaches a predetermined position, the operator may snap one of the two ends of the bracket 600a into one of the two connection holes 601a, and may press the other end of the two ends to deform the other end, enabling the other end to be snapped into the other one of the two connection holes 601a. In this way, the bracket 600a may be assembled quickly.

The bracket 600a provides additional support and stability for the portable device 100a, ensuring safety and stability of the portable device 100a when being placed at the predetermined position. The U-shaped bracket 600a enables the bracket 600a to be easily snapped into the connection holes 601a of the portable device 100a, such that assembling may be performed conveniently.

In order to optimize the above technical solution, the wheel assemblies may further include a support frame. The support frame may be square in shape, and a top of the support frame may be connected to the bottom of the portable device 100a.

Specifically, the support frame may be configured to support the portable device 100a and maintain stability of the portable device 100a when being placed at the position. One of the support frame and the bracket 600a may be applied. The support frame may be configured as a hollow square column. Only one end surface may need to be connected to the bottom of the portable device 100a. In this way, an overall weight of the portable device 100a may be reduced.

In some embodiments, the support frame may be fixedly connected to the portable device 100a to enhance the connection stability between the support frame and the portable device 100a.

In some embodiments, the support frame may be rotatably connected to the portable device 100a. When the support frame is retracted, the support frame may be stored to the bottom of the portable device 100a (a storage space may be formed in the bottom of the portable device 100). When the support frame is extended, the support frame may support the portable device 100a. The support frame may provide additional support and stability for the portable device 100a, ensuring safety and stability of the portable device 100a when being placed at the position.

A specific structure of the wheel assemblies for the portable device may refer to the above embodiments. Since the portable device 100a in the present embodiment incorporates all technical solutions from the above embodiments, the portable device 100a in the present embodiment may possess all technical effects derived from the above embodiments, which will not be repeated herein.

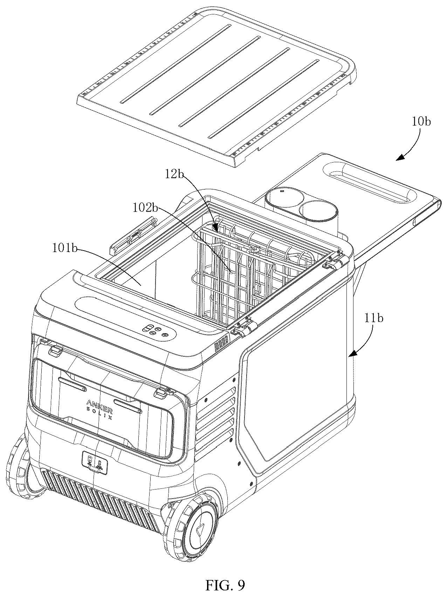

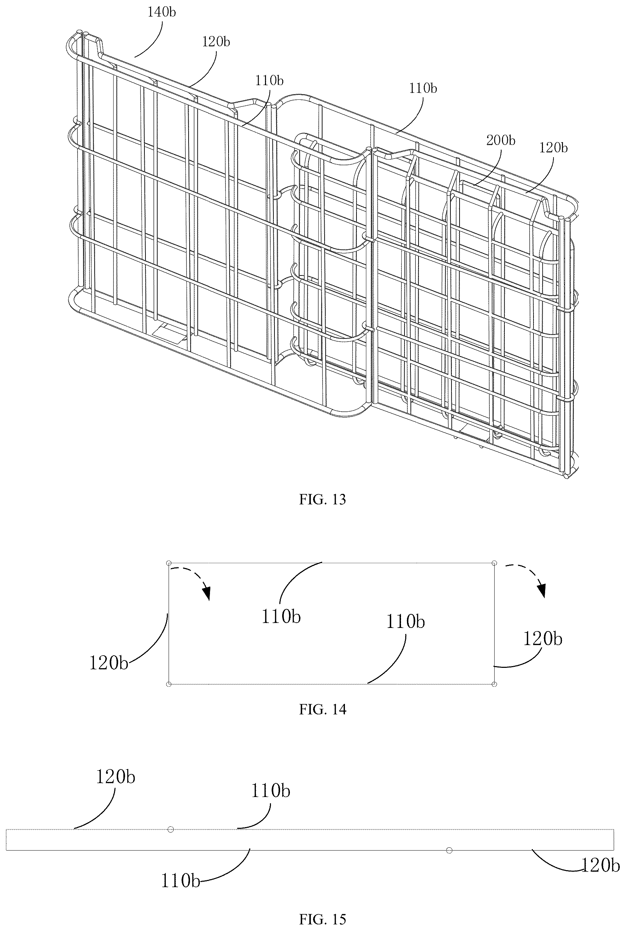

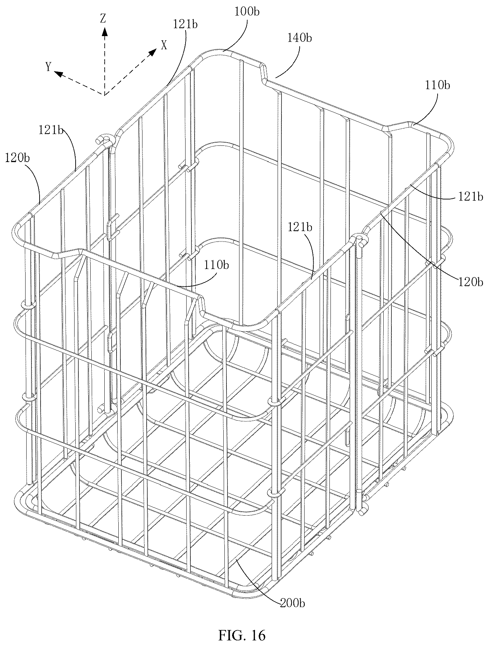

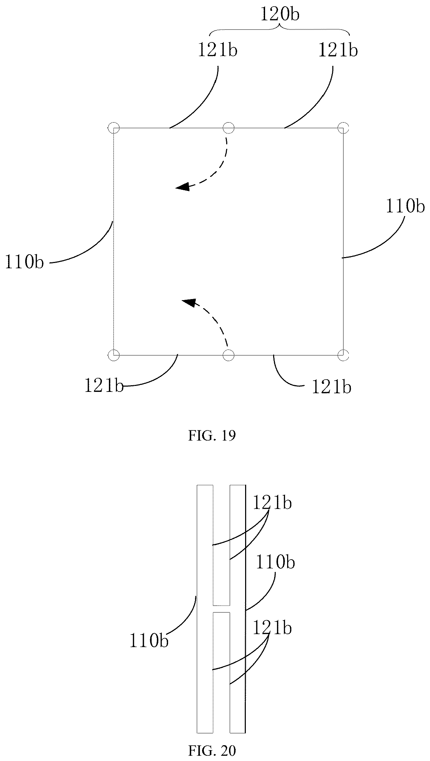

As shown in FIGS. 9-20, a portable device according to another embodiment is provided.

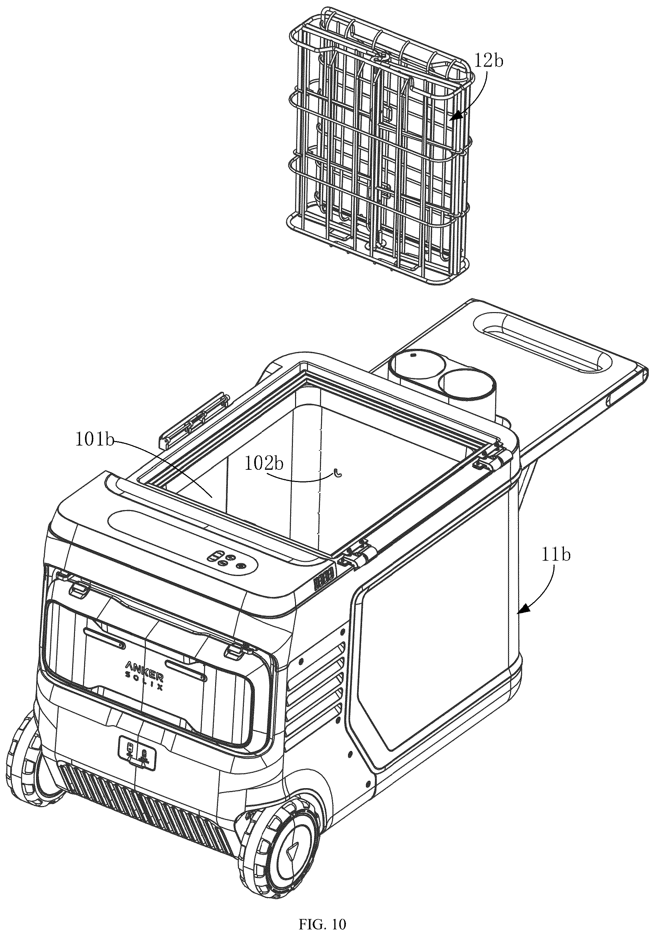

As shown in FIGS. 9 and 10, FIG. 9 shows that the outdoor refrigerator 10b in an embodiment of the present disclosure may be a portable outdoor refrigerator 10b, which may be used both indoors and outdoors. The outdoor refrigerator 10b may include a body portion 11b and a foldable storage basket 12b. A freezing chamber 101b is formed in the body portion 11b, and the foldable storage basket 12b may be fixedly arranged inside the freezing chamber 101b. The foldable storage basket 12b defines an open cavity 130b, and items may be stored in the open cavity 130b. When any item needs to be retrieved, the entire foldable storage basket 12b may be taken out of the freezing chamber 101b, such that the item may be accessed through the open cavity 130b of the foldable storage basket 12b. In this way, retrieving the item may not be interfered by the body portion 11b, ensuring the item to be taken easily and enabling the outdoor refrigerator 10b to be used more conveniently.

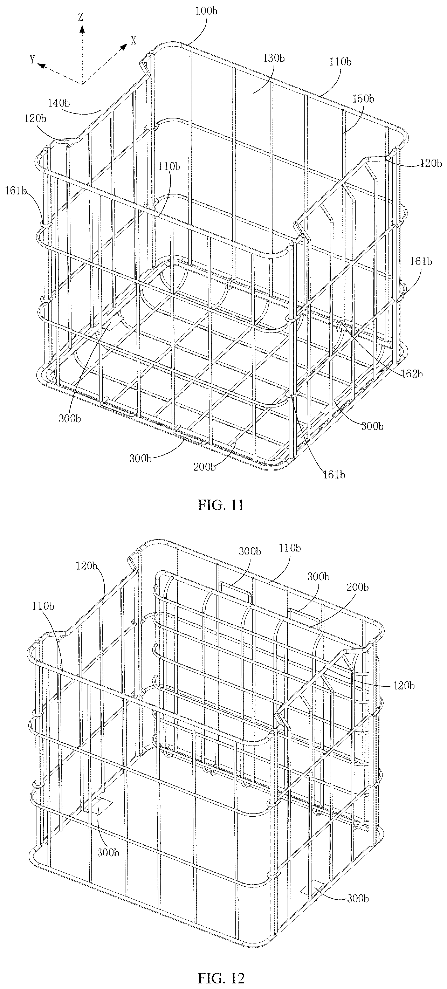

As shown in FIGS. 11, 12, and 13, in some embodiments, the foldable storage basket 12b may include a side frame assembly 100b and a bottom frame 200b. The bottom frame 200b may be rotatably mounted at a end of the side frame assembly 100b. The bottom frame 200b and the side frame assembly 100b cooperatively define the open cavity 130b. When the bottom frame is stacked on the side frame assembly 100b, the side frame assembly 100b may be foldable. During a process of folding the side frame assembly 100b, as the open cavity 130b progressively diminishes until completely disappearing, the side frame assembly 100b and the entire foldable storage basket 12b are in a fully folded state.

For descriptive purposes, three directions may be denoted as a first direction, a second direction, and a third direction. An angle may be formed between the first direction and the second direction. The third direction may be perpendicular to both the first direction and the second direction. For example, when the first direction and the second direction are perpendicular to each other, the first direction, the second direction, and the third direction may be extension directions of three coordinate axes in a spatial Cartesian coordinate system. In this case, the first direction may be an X-axis direction, the second direction may be a Y-axis direction, and the third direction may be a Z-axis direction.

As shown in FIGS. 11, 12, and 13, in some embodiments, the side frame assembly 100b may include at least two side frames. When the two side frames are moving apart from each other, the open cavity 130b may increase in size, such that a storage space is formed in the open cavity 130b. When the two side frames are moving close to each other, the open cavity 130b may decrease in size to allow the foldable storage basket 12b to be folded. For example, the side frame assembly 100b may include a first side frame 110b and a second side frame 120b. Two first side frames 110b may be arranged, and the two first side frames 110b may be spaced apart from each other along the first direction. The second side frames 120b may be arranged, and the two second side frames 120b may be spaced apart from each other along the second direction. Therefore, the side frame assembly 100b may include four side frames. Two ends of each second side frame 120b in the first direction may be rotatably connected to the two first side frames 110b via a rotation shaft that is extending along the third direction. Specifically, for one of the two second side frames 120b, each of the two ends in the first direction may be rotatably connected to one end of a respective one of the two first side frames 110b in the second direction; and for the other one of the two second side frames 120b, each of the two ends in the first direction may be rotatably connected to the other end of the respective one of the two first side frames 110b in the second direction.

As shown in FIGS. 11, 12, and 13, the bottom frame 200b is disposed at an end of the side frame assembly 100b along the third direction, and the bottom frame 200b and the side frame assembly 100b cooperatively form the open cavity 130b. When the first direction and the second direction are perpendicular to each other, the entire foldable storage basket 12b may be a rectangular prism. The bottom frame 200b may be rotatably connected to one of the first side frames 110b via the rotation shaft that is extending along the second direction. The bottom frame 200b may be supported, along the third direction, by the second side frame 120b and/or the other one of the two first side frames 110b. Due to supporting by the second side frame 120b and/or the first side frame 110b, the bottom frame 200b and the side frame assembly 100b may be enabled to form the open cavity 130b, and the bottom frame 200b may be enabled to support the items received in the open cavity 130b. In some embodiments, the foldable storage basket 12b may be a regular triangular prism or any other regular polygonal prism, as long as the foldable storage basket 12b is foldable.

As shown in FIGS. 12, 13, 14, and 15, when storing, packaging, and transporting the foldable storage basket 12b, the bottom frame 200b may firstly be rotated about the rotation shaft that is extending in a second direction until the bottom frame 200b is stacked on one of the first side frames 110b. The first side frame 110b that is stacked with the bottom frame 200b may be fixed in position. The two second side frames 120b may simultaneously rotate clockwise with respect to the first side frame 110b that is stacked with the bottom frame 200b, until one of the two second side frames 120b is stacked on the first side frame 110b that has been stacked with the bottom frame 200b, while the other one of the two second side frames 120b extends in the same direction as the first side frame 110b stacked with the bottom frame 200b, and that is, the other one of the two second side frames 120b is not stacked on the first side frame 110b stacked with the bottom frame 200b. In other words, the other one of the two second side frames 120b is located coplanar with the first side frame 110b that is stacked with the bottom frame 200b. At this moment, the other one of the two first side frames 110b may be stacked on the second side frame 120b that is coplanar with the first side frame 110b stacked with the bottom frame 200b. The above configuration may be understood as the foldable storage basket 12b being in the fully folded state. Apparently, when the foldable storage basket 12b is used to store items, the foldable storage basket 12b may be in a fully unfolded state. It should be understood that, when the first side frame 110b and the second side frame 120b extend in the same direction, the first side frame 110b and the second side frame 120b may be stacked with each other. At this moment, a plane on which the first side frame 110b is arranged may be stacked with a plane on which the second side frame 120b is arranged. Alternatively, the first side frame 110b and the second side frame 120b may not be stacked with each other, and in this case, the plane on which the first side frame 110b is arranged may be coplanar with the plane on which the second side frame 120b is arranged. Apparently, when the foldable storage basket 12b is folded to be stored, the bottom frame 200b may move to approach the side frame assembly 100b. When the foldable storage basket 12b is being unfolded for storing items, the bottom frame 200b may move away from the side frame assembly 100b. During folding the foldable storage basket 12b, the two first side frames 110b may move closer to each other, and the two second side frames 120b may move closer to each other. During unfolding the foldable storage basket 12b, the two first side frames 110b may move away from each other, and the two second side frames 120b may move away from each other.

It can be understood that, when the body portion 11b of the outdoor refrigerator 10b needs to be configured with the foldable storage basket 12b, the foldable storage basket 12b may be detached from the body portion 11b and transported, packaged, and stored independently. During independently transporting, packaging, and storing the foldable storage basket 12b, the foldable storage basket 12b may be in the fully folded state. An overall size of the foldable storage basket 12b may be reduced, such that transportation, packaging, and storage of the foldable storage basket 12b may be achieved conveniently, and costs for transporting, packaging, and storing the foldable storage basket 12b may be reduced.

In some embodiments, when the foldable storage basket 12b is in the fully folded state, the bottom frame 200b may be clamped within the side frame assembly 100b. In this way, the side frame assembly 100b may effectively limit a position of the bottom frame 200b, preventing the bottom frame 200b from rotating relative to the first side frames 110b. In this way, the foldable storage basket 12b may be transported, packaged, and stored conveniently. In some embodiments, when the foldable storage basket 12b is in the fully folded state, the bottom frame 200b may alternatively be disposed outside the side frame assembly 100b.

As shown in FIGS. 11 and 12, in some embodiments, the foldable storage basket 12b may further include a bearing member 300b. The bearing member 300b may be protrudingly arranged on at least one of the bottom frame 200b, the first side frame 110b, and the second side frame 120b. The bearing member 300b may abut against the bottom frame 200b or the first side frame 110b along the third direction. For example, a connection end of the bottom frame 200b may be connected to one of the first side frames 110b. The bearing member 300b may be protruding along the first direction from a free end of the bottom frame 200b. The connection end and the free end of the bottom frame 200b may be two ends that are opposite to each other in the first direction. The bearing member 300b may abut against the other one of the two first side frames 110b along the third direction. In this way, the first side frame 110b may effectively support the bottom frame 200b via the bearing member 300b. It should be understood that during the bottom frame 200b rotating relative to the first side frame 110b, the user may apply a force on the bearing member 300b on the bottom frame 200b, such that the bearing member 300b may conveniently drive the bottom frame 200b to rotate relative to the first side frame 110b, such that the foldable storage basket 12b may be used conveniently. Alternatively, the bearing member 300b may protrude, along the first direction, from the first side frame 110b that is disposed near the free end of the bottom frame 200b. The bearing member 300b may abut against the first side frame 110b along the third direction, enabling the first side frame 110b to support the bottom frame 200b via the bearing member 300b.

As shown in FIGS. 11 and 12, in some embodiments, in order to improve a bearing capacity for supporting the bottom frame 200b and to improve stability and reliability of the foldable storage basket 12b, each of the two second side frames 120b may be arranged with the bearing member 300b that is protruding from the second side frame 120b along the second direction. The bottom frame 200b may abut against the bearing member 300b along the third direction. In this way, the two second side frames 120b may support and bear the bottom frame 200b through two bearing members 300b respectively. In some embodiments, each of the bottom frame 200b, the first side frame 110b, and the second side frame 120b may be arranged with one respective bearing member 300b that is protruding therefrom.

As shown in FIGS. 11 and 12, in some embodiments, the side frame assembly 100b may have the free end that is disposed away from the bottom frame 200b. The free end may be an end of the side frame assembly 100b in the third direction. A position of the first side frame 110b and/or a position of the second side frame 120b near the free end may be recessed toward the open cavity 130b to form a clearance 140b. For example, the clearance 140b may be defined only in the first side frame 110b, or only in the second side frame 120b, or in each of the first side frame 110b and the second side frame 120b. By forming the clearance 140b, when the foldable storage basket 12b is received within the freezing chamber 101b of the body portion 11b, the position of the first side frame 110b or the second side frame 120b where the clearance 140b is formed may not contact and may be spaced apart from an inner chamber surface of the freezing chamber 101b. In this way, both hands of the user may reach into the clearance 140b to apply a lifting force to the foldable storage basket 12b, so as to take the entire foldable storage basket 12b out of the freezing chamber 101b, such that the foldable storage basket 12b may be used conveniently.

As shown in FIGS. 11 and 12, in some embodiments, each of the first side frame 110b, the second side frame 120b, and the bottom frame 200b may include a plurality of support rods 150b. The plurality of support rods 150b may form a grid structure. That is, each of the first side frame 110b, the second side frame 120b, and the bottom frame 200b may be the grid structure. For example, the first side frame 110b may be formed by the plurality of support rods 150b that are extending substantially along the second direction and the third direction. Each mesh opening of the grid structure of the first side frame 110b may be substantially rectangular. The second side frame 120b may be formed by the plurality of support rods 150b that are extending substantially along the first direction and the third direction. Each mesh opening of the grid structure of the second side frame 120b may be substantially rectangular. The bottom frame 200b may be formed by the plurality of support rods 150b that are extending substantially along the first direction and the second direction. Each mesh opening of the grid structure of the bottom frame 200b may be substantially rectangular. In some embodiments, each mesh opening on the first side frame 110b, the second side frame 120b, and the bottom frame 200b may be substantially diamond-shaped or regular polygonal, or the like.

As shown in FIGS. 11 and 12, in some embodiments, a rotation hole may be formed in the second side frame 120b and may be denoted as a first rotation hole 161b. At least one of the plurality of support rods 150b of the first side frame 110b extending along the third direction may be rotatably mated with the first rotation hole 161b. In this way, rotatable connection between the first side frame 110b and the second side frame 120b may be achieved. In other words, the first side frame 110b may be rotatable, via the first rotation hole 161b, with respect to the second side frame 120b. Of course, in some embodiment, the first rotation hole 161b may be formed in the first side frame 110b, and the support rod 150b of the second side frame 120b extending along the third direction may be rotatably engaged with the first rotation hole 161b. In this way, the rotatable connection between the first side frame 110b and the second side frame 120b may be achieved.

As shown in FIGS. 11 and 12, in some embodiments, a rotation hole may be formed in the first side frame 110b and denoted as a second rotation hole 162b. At least one of the plurality of support rods 150b of the bottom frame 200b extending along the second direction may be mated with the second rotation hole 162b, such that rotation connection between the bottom frame 200b and the first side frame 110b may be achieved. In other words, the bottom frame 200b may rotate with respect to the first side frame 110b via the second rotation hole 162b. Of course, the second rotation hole 162b may alternatively be formed in the bottom frame 200b, and the support rod 150b of the first side frame 110b extending along the second direction may be mated with the second rotation hole 162b, such that the rotation connection between the bottom frame 200b and the first side frame 110b may be achieved.

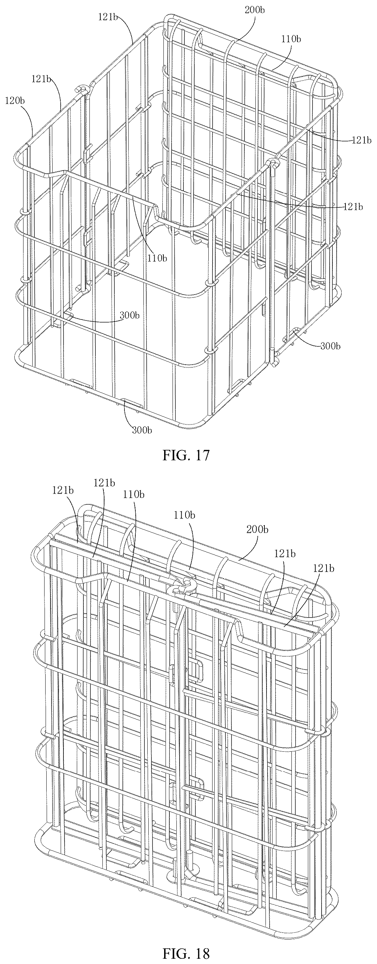

As shown in FIGS. 17, 18, 19, and 20, in some embodiments, each of the second side frames 120b may include two rotation portions 121b. The two rotation portions 121b are in an equal length in the first direction. An end of each two rotation portion 121b may be rotatably connected via a rotation shaft extending along the third direction. The other end of each rotation portion 121b may be rotatably connected via another shaft extending along the third direction to a respective one of the two first side frames 110b. When the foldable storage basket 12b needs to be folded, the bottom frame 200b may firstly be rotated to be stacked on one of the two first side frames 110b, the first side frame 110b stacked with the bottom frame 200b may be fixed in position, and the two rotation portions 121b that are directly connected to the first side frame 110b stacked with the bottom frame 200b may be rotated until the two rotation portions 121b are stacked on the first side frame 110b that has been stacked with the bottom frame 200b. In may be understood as the second side frame 120b being recessed inward. After the two rotation portions 121b directly connected to the first side frame 110b that has been stacked with the bottom frame 200b are stacked, the two rotation portions 121b on the same second side frame 120b may be stack with each other. The other one of the two first side frames 110b may further be stacked on the rotation portions 121b. That is, the two rotation portions 121b of the same second side frame 120b may be folded within a gap between the two first side frames 110b, such that the two rotation portions 121b of the same second side frame 120b may be disposed between the two first side frames 110b. In this way, the foldable storage basket 12b may be in the fully folded state, and a size of the foldable storage basket 12b in the fully folded state may further be reduced. Therefore, the foldable storage basket 12b may be transported, packaged, and stored more conveniently, and costs for transporting, packaging, and storing the foldable storage basket 12b may be reduced. Of course, during folding the foldable storage basket 12b, the second side frame 120b may protrude outwardly. When the first side frame 110b stacked with the bottom frame 200b is fixed in position, the two rotation portions 121b of the same second side frame 120b may be stacked with each other, and the two first side frames 110b may be stacked with each other. However, the two stacked rotation portions 121b may be disposed outside the two first side frames 110b rather than being clamped between the two first side frames 110b. In this way, the fully folded state of the foldable storage basket 12b may be achieved. In other words, the two rotation portions 121b of the same second side frame 120b may be folded at a position outside the gap between the two first side frames 110b.

It should be understood that, depending on practical requirements, the foldable storage basket 12b having the two rotation portions 121b on the second side frame 120b may be folded in the same way as the foldable storage basket 12b that does not have two rotation portions 121b for the second side frame 120b.

As shown in FIGS. 9 and 10, in some embodiments, the body portion 11b may further include a hanging member 102b. The hanging member 102b may be protrudingly arranged on the inner chamber surface of the freezing chamber 101b and may be configured to hang the folded foldable storage basket 12b. For example, for the foldable storage basket 12b where the second side frame 120b includes the two rotation portions 121b, when the second side frame 120b is folded inward, the foldable storage basket 12b may be folded within the freezing chamber 101b, and the storage basket 12b in the fully folded state may be hung on the hanging member 102b. When the foldable storage basket 12b needs to be unfolded to receive items, the foldable storage basket 12b may be transformed from the fully folded state to the fully unfolded state within the freezing chamber 101b. Therefore, by hanging the fully folded storage basket 12b on the hanging member 102b, during transporting the outdoor refrigerator 10b, collision between the folded storage basket 12b and the inner chamber surface of the freezing chamber 101b may be avoided, such that damage to the body portion 11b may be prevented.

In some embodiments, both the first side frame 110b and the second side frame 120b may abut the inner chamber surface of the freezing chamber 101b. It may be understood as the size of the foldable storage basket 12b being substantially equivalent to a size of the freezing chamber 101b, such that the foldable storage basket 12b may fill the entire freezing chamber 101b. In this case, a length and a width of the foldable storage basket 12b may be equal to a length and a width of the freezing chamber 101b. Therefore, all items may be stored within the open cavity 130b of the foldable storage basket 12b. When the length and the width of the foldable storage basket 12b are equal to the length and the width of the freezing chamber 101b, a distance between the two first side frames 110b may be equal to a distance between the two inner chamber surfaces of the freezing chamber 101b that are spaced apart from each other along the first direction, and a distance between the two second side frames 120b may be equal to a distance between another two inner chamber surfaces of the freezing chamber 101b that are spaced apart from each other along the second direction.

In some implementations, when the length of the foldable storage basket 12b is unequal to the length of the freezing chamber 101b, or when the width of the foldable storage basket 12b is unequal to the width of the freezing chamber 101b, the distance between the two first side frames 110b may be less than the distance between the two inner chamber surfaces of the freezing chamber 101b that are spaced apart from each other along the first direction; or the distance between the two second side frames 120b may be less than the distance between the another two inner chamber surfaces of the freezing chamber 101b that are spaced apart from each other along the second direction. When the foldable storage basket 12b is placed within the freezing chamber 101b, at least one of the first side frame 110b and the second side frames 120b adjacent to the first side frame 110b may be spaced apart from the inner chamber surface of the freezing chamber 101b. It may be understood as the size of the foldable storage basket 12b being smaller than that of the freezing chamber 101b, and the foldable storage basket 12b may not fully fill the entire freezing chamber 101b. The length or the width of the foldable storage basket 12b may be approximately 50 mm shorter than the length or the width of the freezing chamber 101b. Therefore, the items may be stored within the open cavity 130b of the foldable storage basket 12b, and items may further be stored in a space that is outside the open cavity 130b and is within the freezing chamber 101b.

In some embodiments, the foldable storage basket 12b may further include an anti-slip structure. The anti-slip structure may be arranged on the bottom frame 200b and may be an uneven surface structure on the bottom frame 200b. In this way, surface roughness of the bottom frame 200b may be improved. Alternatively, the anti-slip structure may be an anti-slip layer that has a high coefficient of friction and is attached to the bottom frame 200b. The anti-slip structure may prevent the unfolded foldable storage basket 12b from sliding within the freezing chamber 101b.

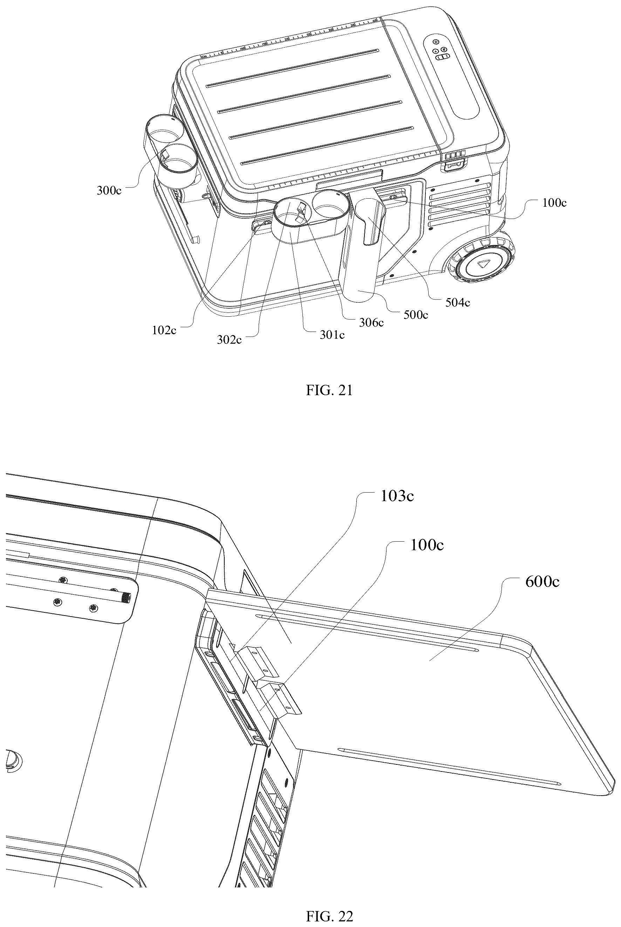

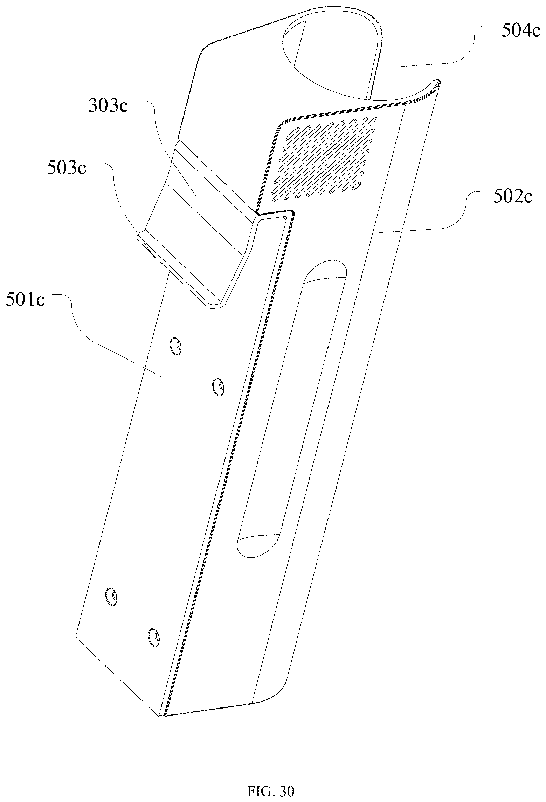

FIGS. 21 to 32 show another portable device provided by an embodiment of the present disclosure.

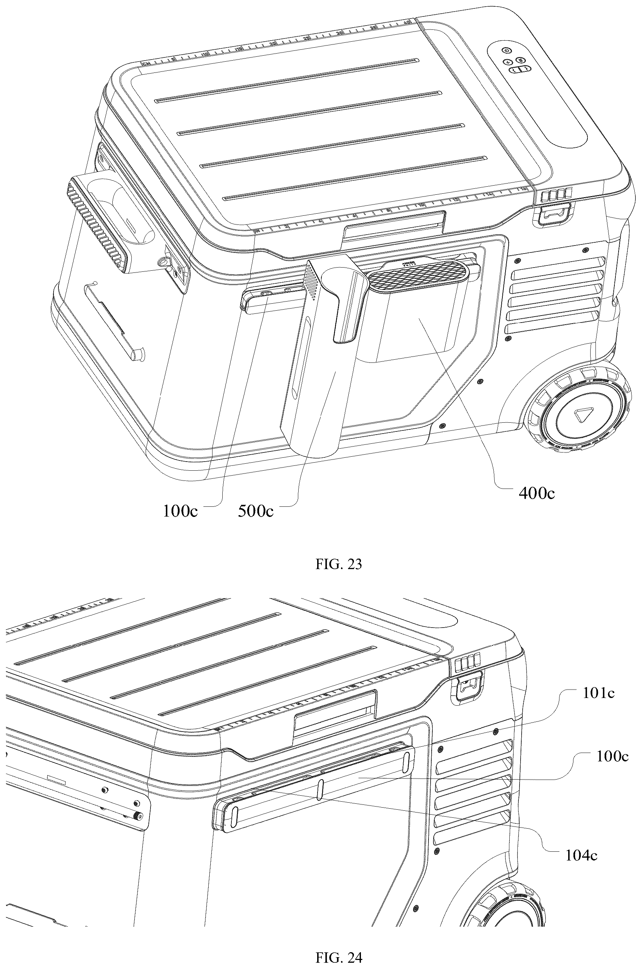

As shown in FIGS. 21 and 24, embodiments of the present disclosure provide an outdoor portable device including a device body and a hanging attachment member 100c. The hanging attachment member 100c may be connected to an outer side wall of the device body. The hanging attachment member 100c may be arranged with a hanging attachment portion, a length of the hanging attachment portion may extend along a horizontal direction. The hanging attachment member 100c may be configured to store outdoor tools on the outdoor portable device via the hanging attachment portion. The hanging attachment portion may include at least one of: a snap-fit groove 101c and a through hole 102c.

Specifically, since the hanging attachment member 100c is disposed at the outer side wall of the device body, the hanging attachment member 100c must be light in weight and compact in size. A thickness of the hanging attachment member 100c may be minimized while meeting requirements for hanging items, such that the hanging attachment member 100c may not excessively protrude from the outer side wall of the device body. A length of the hanging attachment member 100c may be shorter than a length of the device body, preventing the hanging attachment member 100c from extending beyond side edges of the device body. Therefore, a size of the hanging attachment member 100c may be reasonably determined to satisfy usage requirements. The size of the hanging attachment member 100c in the present disclosure application may enable the tool to be conveniently hung on the device body, providing a function for hanging the tool on mobile devices. A burden of carrying additional items may be reduced, and practicality of the device may be improved.

Specifically, the outdoor portable device may be an outdoor power bank, an outdoor portable refrigerator, or an outdoor portable air conditioner.

In some embodiments, the hanging attachment member 100c may be disposed on a lateral side of an outer shell of the device, so as to secure the hanging attachment member 100c.

The outdoor portable device provided by the present disclosure may include the device body and the hanging attachment member. While in use, the hanging attachment member 100c may be mounted on the outer surface of the device body, and the tool may be connected to the hanging attachment member 100c via the hanging attachment portion. Since the hanging attachment portion includes at least one of the snap-fit groove and the through hole, the hanging attachment member 100c may hang various items to meet various user needs. In this way, application scenarios of the outdoor portable device may be expanded.

In some embodiments, the hanging attachment member 100c may be fixedly connected to the device.

Specifically, the hanging attachment member 100c may be secured to the lateral side of the device via insertion, bonding, or screw connection. In the present embodiment, screw connection between the hanging attachment member 100c and the device may be configured, so as to ensure connection stability. Specifically, the hanging attachment member 100c may define a horizontal screw hole, and the outer side wall of the outdoor portable device may define a mounting hole mated with the screw hole.

Specifically, the hanging attachment member 100c may be securely fixed to the device through a fastener, such as a screw.

In some embodiments, the hanging attachment member 100c may be an internally solid structure and may define a snap-fit groove 101c along only a z-axis direction. A screw hole penetrating the hanging attachment member 100c may be defined horizontally. The screw may pass through the screw hole and the mounting hole to connect the hanging attachment member 100c to the lateral side of the outdoor portable device, such that the hanging attachment member 100c may be fixed to the device.

In some embodiments, an interior of the hanging attachment member 100c may be hollow. A plurality of reinforcing ribs and a stud may be arranged at the interior of the hanging attachment member 100c. The plurality of reinforcing ribs may enhance structural strength of the hanging attachment member 100c. The stud may be configured to fix the hanging attachment member 100c. The screw hole may be defined in the stud. The screw may pass through the screw hole and the mounting hole to connect the hanging attachment member 100c to the lateral side of the device, so as to fix the hanging attachment member 100c. In the present embodiment, the weight of the hanging attachment member 100c may be reduced, and the structural strength of the hanging attachment member 100c may be ensured by arranging the plurality of reinforcing ribs, enabling the hanging attachment member 100c to be able to hang and support hanging tools.

Furthermore, a plurality of screw holes may be defined and may be evenly distributed across a left, a right, and a central portion of the hanging attachment member 100c. In some embodiments, six screw holes are arranged across the left, the right and the central portion of the hanging attachment member 100c to meet fastening requirements.

In the above embodiments, secure connection may be provided, ensuring stability of the hanging attachment member 100c while in use. Furthermore, the screw hole and the mounting hole may facilitate the hanging attachment member 100c to be quickly and easily mounted and detached, such that the hanging attachment member 100c may be stored and assembled simply.

Specifically, a direction in which the through hole 102c is defined may be the same as a direction in which the snap-fit groove is defined 101c.

The hanging attachment portion may define a plurality of snap-fit grooves 101c that are spaced apart from each other along a length direction of the hanging attachment portion. Alternatively, a plurality of through holes 102c may be formed in the hanging attachment portion and may be spaced apart from each other along the length direction of the hanging attachment portion. Alternatively, the hanging attachment portion may define both the plurality of snap-fit grooves 101c and the plurality of through holes 102c. The plurality of snap-fit grooves 101c and the plurality of through holes 102c may be spaced apart from each other along the length direction of the hanging attachment portion.

Specifically, the snap-fit grooves 101c and the through holes 102c are configured to hang outdoor tools. the user may select, based on a shape and a size of a to-be-hung tool, either the snap-fit groove 101c and/or the through hole 102c for hanging purposes.

Specifically, specifications of each snap-fit groove 101c may be determined based on the thickness and the length of the hanging attachment member 100c. In the present embodiment, a length of the snap-fit groove 101c may be 100 mm.

The hanging attachment member 100c may include a front surface 103c facing outward, a rear surface 104 facing the device body, and a top surface, a bottom surface, a left surface, and a right surface. The top surface, the bottom surface, the left surface, and the right surface may be disposed between the front surface 103c and the rear surface 104 and may be sequentially connected to each other. Among the top surface, the bottom surface, the left surface, and the right surface, at least the bottom surface may be recessed inward toward the top surface.

Specifically, the hanging attachment member 100c may be a square structure formed by the front surface 103c, the rear surface 104, the top surface, the bottom surface, the left surface, and the right surface. The snap-fit grooves 101c and the through holes 102c may be formed in the top surface and the bottom surface. In this way, the snap-fit grooves 101c and the through holes 102c, which vertically penetrate the hanging attachment member 100c, may be formed, facilitating insertion structures to be inserted therein, which will be described later.

While in use, when the bottom surface is recessed towards the top surface, a first insertion portion may be inserted into at least one of the plurality of snap-fit grooves 101c. A latch portion 503c of the first insertion portion 303c may abut against a recessed bottom surface, such that secure snap-fit connection may be achieved.

It should be noted that the above connection between the hanging attachment member 100c and the device may cause the hanging attachment member 100c to protrude out from the outer surface of the device, which may affect an outer appearance of the device. Furthermore, during moving, the hanging attachment member 100c may abrade the device, potentially leading to damage or breakage. Therefore, the connection between the hanging attachment member 100c and the device may be further improved by adjusting a structure, a position, and a storage manner. In this way, when the hanging attachment member 100c is placed, the hanging attachment member 100c may not protrude out from the outer surface of the device.

The outer side wall of the device body may define a receiving slot. A length of the receiving slot extends horizontally (i.e., extends along a longitudinal axis of the device body), a width of the receiving slot extends vertically (i.e., extends perpendicularly to the length of the receiving slot and extends on a plane on which the outer side wall of the device body is located), and a depth of the receiving slot extends horizontally (i.e., extends perpendicularly to both the length and the width of the receiving slot) toward an interior of the device body. The receiving slot is configured to receive the hanging attachment member 100c.

In some embodiments, the hanging attachment member 100c may be rotatable connected to the device.

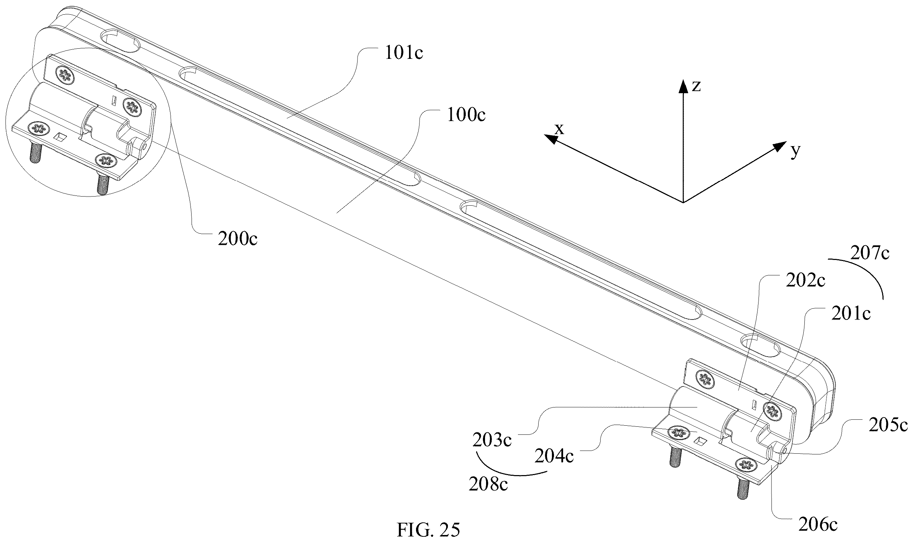

As shown in FIG. 25, in order to optimize the above technical solution, a rotation assembly 200c may be further arranged. The rotation assembly 200c may include a first hinge 207c, a second hinge 208c, and a first rotation shaft. The first hinge 207c may include a first connection portion 201c and a first fixation portion 202c. The second hinge 208c may include a second connection portion 203c and a second fixation portion 204c. The first connection portion 201c may be rotatably connected to the second connection portion 203c via the first rotation shaft. The first fixation portion 202c may be connected to the hanging attachment member 100c, and the second fixation portion 204c may be connected to a slot wall of the receiving slot. When the first fixation portion 202c and the second fixation portion 204c are attached to each other, the hanging attachment member 100c may be received within the receiving slot. When the first fixation portion 202c and the second fixation portion 204c are moving apart from each other, the hanging attachment member 100c may be released out of the receiving slot.

The rotation assembly 200c may include the first hinge 207c, the second hinge 208c, and the first rotation shaft. The first hinge 207c, the second hinge 208c, and the first rotation shaft cooperatively form a rotatable mechanism. When the first fixation portion 202c and the second fixation portion 204c are attached to each other, the hanging attachment member 100c may be received within the receiving slot defined in the outer side wall of the device. When the first fixation portion 202c and the second fixation portion 204c are separated from each other, the hanging attachment member 100c may be released out of the receiving slot.

Specifically, the first fixation portion 202c may be connected to the hanging attachment member 100c via a fastener such as a screw, and the second fixation portion 204c may be connected to the slot wall of the receiving slot via a fastener such as a screw. In the present embodiment, the first fixation portion 202c may include two mounting holes in which fasteners may be mounted, and the second fixation portion 204c may include two mounting holes in which fasteners may be mounted.

Specifically, a sum of a length of the first connection portion 201c and a length of the second connection portion 203c may be equal to a length of the rotation shaft. The first connection portion 201c and the second connection portion 203c may be connected to one rotation shaft and may be rotatable relative to each other.

Specifically, one or more rotation assemblies 200c may be arranged on the outdoor portable device. In the present embodiment, each of two ends of the outdoor portable device may be arranged with one respective rotation assembly 200c.

Specifically, formation of the receiving slot may be determined based on mounting of the hanging attachment member 100c, i.e., a space for mounting the rotation assembly 200c may be reserved.

Specifically, the snap-fit groove 101c may be defined along the z-direction of the hanging attachment member 100c, such that a space for the snap-fit grooves 101c and the number of the snap-fit grooves 101c may be maximized, facilitating the tools to be hung thereon.

Initially, the first fixation portion 202c may be fixed to the hanging attachment member 100c, and the second fixation portion 204c may be fixedly received in the receiving slot. The hanging attachment member 100c may be received within the receiving slot, and the first fixation portion 202c and the second fixation portion 204c may be attached to each other. The operator may insert a hand into the receiving slot and act on the hanging attachment member 100c. Under an action of the rotation shaft, the hanging attachment member 100c may be rotated out of the receiving slot. The hanging attachment member 100c may be released out of the receiving slot, enabling the snap-fit groove 101c to be extending vertically. In this way, the tool may be hung in the snap-fit groove 101c. The rotation assembly 200c provides a flexible storage manner, enabling the hanging attachment member 100c to be stored in the receiving slot. Furthermore, the outdoor portable device may not occupy additional space when not in use. Furthermore, the rotation assembly 200c enables the hanging attachment member 100c to be expanded and retracted simply by the operator, such that the device may be used more conveniently.

It should be noted that based on configuration of the hanging attachment member 100c in an operating state (a state in which tools are hung on the hanging attachment member 100c), a height direction of the hanging attachment member 100c may be defined as the z-axis direction, a length direction of the hanging attachment member 100c may be defined as an x-axis direction, and a width direction of the hanging attachment member 100c may be defined as a y-axis direction. In order to ensure that, after the rotational assembly 200c is rotated, the snap-fit groove 101c is precisely parallel to the outer surface of the device (i.e., extending vertically), a size of the hanging attachment member 100c in the z-axis direction may be slightly greater than a depth of the receiving slot. When an angle formed between the first fixation portion 202c and the second fixation portion 204c is 90°, an excess length of the hanging attachment member 100c in the z-axis direction may be snap-fit with the outer surface of the device. In this way, further rotation of the hanging attachment member 100c may be prevented, positional limit for the hanging attachment member 100c may be achieved, and the device may be used more conveniently.

Furthermore, based on the above configuration, in a case that the depth of the receiving slot is greater than or equal to the size of the hanging attachment member 100c in the z-axis direction, when the hanging attachment member 100c is received inside the receiving slot, an edge of the hanging attachment member 100c may not protrude out of the outer surface of the device. in this case, the device may be used more conveniently.

In order to optimize the above technical solution to ensure that the edge of the hanging attachment member 100c does not protrude beyond the outer surface of the device, when the hanging attachment member 100c is stored within the receiving slot, and that the positional limit for the hanging attachment member 100c can be achieved, the first connection portion 201c may be arranged with a first abutting end 205c, and the second connection portion 203c may be arranged with a second abutting end 206c. When the angle formed between the first fixation portion 202c and the second fixation portion 204c is 90°, the first abutting end 205c may abut against the second abutting end 206c.

Specifically, the first connection portion 201c may be cylindrical. Since the first connection portion 201c needs to be rotatable, a groove may be formed in the second fixation portion 204c to provide a space for the first connection portion 201c during rotation. An edge of the groove may be configured as the second abutting end 206c. The first abutting end 205c is formed at a position of the first fixation portion 202c corresponding to the second abutting end 206c. The first abutting end 205c may be an abutting surface formed on the first fixation portion 202c. When the first fixation portion 202c rotates to reach a predetermined position, the second abutting end 206c may abut against the abutting surface, preventing further rotation of the first fixation portion 202c, such that positional limit for the rotation assembly 200c is achieved.

In this way, a position limiting structure may be configured on the rotation assembly 200c, enabling the hanging attachment member 100c to be fully received into the receiving slot and enabling positional limiting to be achieved at the same time. The first abutting end 205c and the second abutting end 206c prevents the outdoor portable device from shaking or being disassembled when the outdoor portable device is in the unfolded state. Mating between the first abutting end 205c and the second abutting end 206c provides a stable support angle for the outdoor portable device, ensuring the outdoor portable device to be used stably, such that the device may be used more conveniently.

In order to optimize the above technical solution, a side of the hanging attachment member 100c connected to the first fixation portion 202c may be denoted as a first side of the hanging attachment member 100c. A second side of the hanging attachment member 100c may be arranged opposite to the first side. A pull cord may be connected to the second side of the hanging attachment member 100c and may be configured to pull the first fixation portion 202c in a direction away from the second fixation portion 204c.

Specifically, depending on usage requirements, the pull cord may be a single cord or a looped cord to facilitate user operation.

Specifically, a fixation ring may be arranged on the first fixation portion 202c, and the pull cord may be movably mounted on the fixation ring. In this way, the pull cord may be easily removed. When the operator does not need to use the pull cord, the hanging attachment member 100c may still be pulled out by pulling the fixation ring.

Initially, the pull cord, the hanging attachment member 100c, and a fixation surface are all located inside the receiving slot. The operator may pull the pull cord to move the first fixation portion 202c away from the second fixation portion 204c to pull the hanging attachment member 100c out of the receiving slot. When the hanging attachment member 100c needs to be stored, the hanging attachment member 100c only needs to be pushed back into the receiving slot, and the pull cord may be placed into the receiving slot. The pull cord enables the operator to operate the hanging attachment member 100c simply and intuitively, and the operator may easily expand or retract the hanging attachment member 100c, and the device may be used more conveniently.

Furthermore, the hanging attachment member 100c may be resiliently mounted in the receiving slot. Specifically, the hanging attachment member and the interior of the receiving slot may be arranged with a pressing member. While in use, the user may press the hanging attachment member 100c inward, and the hanging attachment member may be ejected out of the receiving slot. When the user presses the attachment 100c inward again, the hanging attachment member 100c may be retracted back into the receiving slot. A structure and a connection manner of the pressing member may be conventional and will not be described herein.

In order to optimize the above technical solution, the insertion structure may be configured in various ways.

The outdoor tool may include a tool body and an insertion structure. In some embodiments, the insertion structure may include a first insertion portion 303c, which is disposed at a bottom or a side wall of the tool body. A length of the first insertion portion 303c extends along the depth direction of the snap-fit groove 101c. The first insertion portion 303c may be inserted with the snap-fit groove 101c to enable the tool body to be hung on the hanging attachment member 100c.

Furthermore, when the first insertion portion 303c is inserted into the snap-fit groove 101c, the tool may be hung on the hanging attachment member 100c solely through the insertion between the first insertion portion 303c and the snap-fit groove 101c. Alternatively, the first insertion portion 303c may be inserted in the snap-fit groove 101c, and at the same time, the first insertion portion 303c and the tool body may clamp either the groove wall of the snap-fit groove 101c or a hole wall of the through hole 102c, such that dual snap-fit connection may be formed. In some embodiments, the insertion structure further includes a second insertion portion 304c. The second insertion portion 304c and the first insertion portion 303c may be parallel to each other and may be arranged on the side wall or the bottom of the outdoor tool. When the tool body is hung on the hanging attachment member 100c, the first insertion portion 303c and the second insertion portion 304c clamp a groove wall of the snap-fit groove 101c on the hanging attachment member 100c near the front surface 103c, or, the first insertion portion 303c and the second insertion portion 304c clamp a hole wall of the through hole 102c of the hanging attachment member 100c near the front surface 103c.

In some embodiments, the insertion structure includes a snap-back portion 503c disposed at a bottom of the first insertion portion 303c. When the tool body is hung on the hanging attachment member 100c, the first insertion portion 303c is inserted in the snap-fit groove 101c, and the snap-back portion 503c abuts against the bottom surface, the rear surface 104, or the front surface 103c of the hanging attachment member 100c.

Specifically, the snap-back portion 503c may extend backward in a direction toward a top of the first insertion portion 303c. The snap-back portion 503c may extend backward along a side away from the device body. In this case, the snap-back portion 503c contacts the bottom surface and the front surface 103c of the hanging attachment member 100c. Alternatively, the snap-back portion 503c may extend backward along a side near the device body. In this case, the snap-back portion 503c abuts against the bottom surface and the rear surface 104 of the hanging attachment member 100c. When forming backward snapping, the snap-back portion 503c abuts against a joint where the bottom surface and the front surface 103c of the hanging attachment member 100c are connected to each other, or abuts against a joint where the bottom surface and the rear surface 104 of the hanging attachment member 100c are connected to each other. A tapered configuration enhances stability of snap-fitting formed via the snap-back portion 503c.

In some embodiments, the insertion structure may include two first insertion portions 303c and two snap-back portions 503c. The insertion structure further includes a hinge member. The hinge member includes a first hinge portion 601c, a second rotation shaft, and a second hinge portion 602c. The first hinge portion 601c may be connected to the tool body, the first hinge portion 601c may be rotatably connected to the second hinge portion 602c via the second rotation shaft. The second hinge portion 602c may be connected to the first insertion portion 303c, and the first insertion portion 303c may be rotatably connected to the tool body via the hinge member.

It should be noted that the above insertion structure may be flexibly applied to various types of tool bodies. The outdoor tools may include a cup holder 300c, a knife holder 400c, a fishing rod holder 500c, or a table plate 600c. The insertion structure may be arbitrarily used in combination with various types of tool bodies. For example, the cup holder 300c may be connected to the snap-fit groove 101c via the first insertion portion 303c, or via both the first insertion portion 303c and the second insertion portion 304c. Some combinations will be described below.

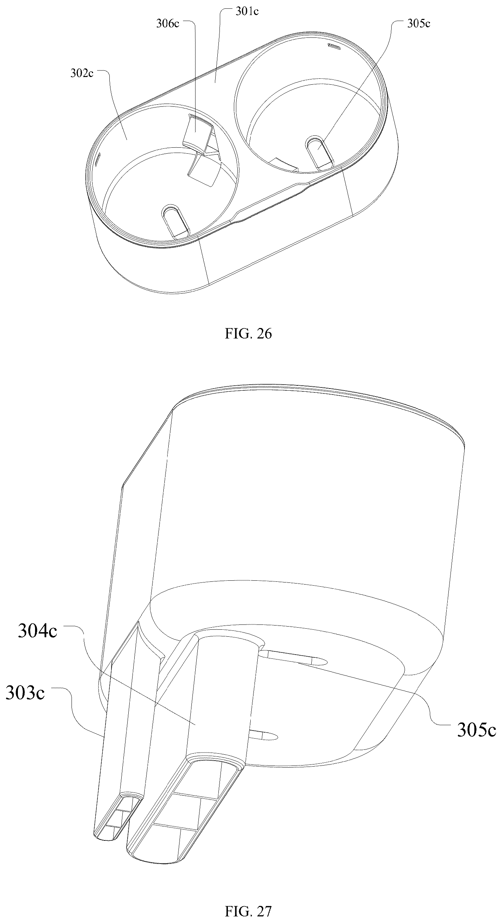

As shown in FIGS. 26-28, in order to optimize the above technical solution, the tool body may include the cup holder 300c. The cup holder 300c may include a first shell 301c and a second shell 302c, and the first shell 301c sleeves an exterior of the second shell 302c. The second shell 302c is configured to hold a cup.

Specifically, a bottom of the first shell 301c may be arranged with the first insertion portion 303c that is extending vertically.

Specifically, the cup holder 300c may be configured to enable the user to drink water during performing outdoor activities.

Specifically, the cup holder 300c may include one or more placement positions, and each of the one or more placement positions may be configured to hold one cup. In the present embodiment, the first shell 301c may define an inner cavity, and the second shell 302c is arranged with two placement positions. Each of the two placement positions may be configured as a cylindrical cavity.

Specifically, by arranging the first shell 301c to sleeve the exterior of the second shell 302c, structural strength of the cup holder 300c may be improved.

While in use, the first insertion portion 303c may be snapped within the snap-fit groove 101c to fix the cup holder 300c to the hanging attachment member 100c. A size of the first insertion portion 303c may be less than or equal to a size of the snap-fit groove 101c, such that the first insertion portion 303c may fully fill the snap-fit groove, so as to ensure connection strength between the cup holder 300c and the hanging attachment member 100c.

In order to optimize the aforementioned technical solution, the second insertion portion 304c may be arranged at the bottom of the first shell 301c and may be parallel to the first insertion portion 303c. The first insertion portion 303c and the second insertion portion 304c may be configured to clamp the groove wall of the snap-fit groove 101c.

Specifically, a distance between the second insertion portion 304c and the first insertion portion 303c may be equal to the thickness of the groove wall of the snap-fit groove 101c. In this way, when the first insertion portion 303c is snapped into the snap-fit groove 101c, the second insertion portion 304c and the first insertion portion 303c may properly clamp the groove wall of the snap-fit groove 101c.

Specifically, the size of the second insertion portion 304c may be greater than the size of the first insertion portion 303c to increase a support area of the second insertion portion 304c. The second insertion portion 304c and the first insertion portion 303c may bear forces cooperatively, so as to clamp the groove wall of the snap-fit groove 101c more stably, and the cup holder 300c may be firmly hung on the outdoor portable device.

Specifically, both a height of the first insertion portion 303c and a height of the second insertion portion 304c may be greater than the length of the hanging attachment member 100c in the z-axis direction, so as to ensure stable connection with the hanging attachment member 100c. Furthermore, the height of the second insertion portion 304c may be greater than the height of the first insertion portion 303c to prevent the first insertion portion 303c from slipping out of the snap-fit groove 101c.

Specifically, reinforcing ribs may be arranged inside the first insertion portion 303c and the second insertion portion 304c to enhance structural strength thereof and ensure sufficient support.

In order to optimize the above technical solution, the bottom of the first shell 301c and the bottom of the second shell 302c may be tapered and inclined downward vertically. Each of the bottom of the first shell 301c and the bottom of the second shell 302c may define a drainage hole 305c.

Specifically, each of the bottom of the first shell 301c and the bottom of the second housing 302c may be tapered to form a water-guiding slope. The water-guiding slope, in combination with the drainage hole 305c, water accumulated at the placement position of the second shell 302c may be rapidly drained. In this way, bacterial growth and odor issues may be prevented, usage experience of the cup holder 300c may be improved.

While in use, the first insertion portion 303c and the second insertion portion 304c may clamp the groove wall of the snap-fit groove 101c. The cup may be placed inside any placement position, and the cup holder 300c may be stably placed by support of the first insertion portion 303c and the second insertion portion 304c. When any water is accumulated in the placement position, the accumulated water may be drained out through the drainage hole 305c along the water-guiding slope. The configuration of the cup holder 300c enables the user to drink water more conveniently, meeting needs during outdoor activities and expanding application scenarios of the outdoor portable device.

In order to optimize the above technical solution, a latch 309c may be arranged at a top of the first shell 301c, and a latch hole may be arranged on a top of the second shell 302c. When the first shell 301c and the second shell 302c are assembled to each other, the latch 309c may be engaged with the latch hole. A bent latch 306c may be arranged on a side wall of the second shell 302c and extending along an axial direction. A protruding end of the bent latch 306c may be disposed near an axis of the second shell 302c. A top of the bent latch 306c may be connected to the side wall of the second shell 302c. A bottom of the bent latch 306c may be suspending above the bottom of the second shell 302c. The bottom of the first shell 301c may be connected to a support plate 307c that is extending along the axial direction. When the water cup is placed inside the water cup holder 300c, the support plate 307c may be attached to the bent latch 306c. The first shell 301c further includes an L-shaped block plate 308c. A first portion 3081c of the L-shaped block plate 308c may be connected to the bottom of the first shell 301c, and a second portion of the L-shaped block plate 308c may be connected to the support plate 307c. When the support plate 307c is attached to the bent latch 306c, the L-shaped block plate 308c may seal a gap between the support plate 307c and the bent latch 306c.

Specifically, in some embodiments, six latches 309c and six latch holes may be arranged. The six latches 309c may be uniformly distributed along the top of the first shell 301c, and the six latch holes may be uniformly distributed along the top of the second shell 302c. A position of each latch 309c may correspond to a position of a respective one of the six latch holes.

Specifically, the bent latch 306c may be integrally formed with the side wall of the second shell 302c. The side wall of the second shell 302c may define a bent hole configured to receive the bent latch 306c. The protruding end of the bent latch 306c may protrude inwardly, towards the placement position to abut against the cup. The support plate 307c may be vertically mounted at the bottom of the first shell 301c. While in use, when the cup is placed inside the placement position, a protrusion of the bent latch 306c may be disposed between the support plate 307c and a wall of the cup. The protrusion may be pressed to be flattened to some extent (a shape of the protrusion at this moment may be determined by a diameter of the cup) and may be retracted into the bent hole. When the protrusion of the bent latch 306c is pressed to be fully flattened, the diameter of the cup may be equal to a diameter of the placement position. In this case, the bent latch 306c may be fully retracted into the bent hole and may be attached to both the support plate 307c and the wall of the cup.

Specifically, support plate 307c may be configured to support and protect bent latch 306c, preventing brittle fracture damage, when the bent latch 306c is compressed by a large-sized cup. The L-shaped block plate 308c may be configured to compensate for any gap formed between the bent latch 306c and the support plate 307c after the first shell 301c and the second shell 302c are assembled to each other. In this way, any food residue or debris may be prevented from falling into an interior space between the first shell 301c and second shell 302c, such that waste or water accumulation may be prevented, and contamination of the cup holder 300c may be prevented. Sealing performance of the cup holder 300c may be improved. The bent latch 306c and the support plate 307c may cooperatively enable the cup holder 300c to better receive cups in various sizes, may improve stability and sealing performance of the cup holder, and may prevent the cup from shaking and prevent water leakage.

Furthermore, when the outer shell of the device is arranged with a larger-capacity slot, both the first insertion portion 303c and the second insertion portion 304c may be simultaneously snapped inside the larger-capacity slot. Sides of the first insertion portion 303c and the second insertion portion 304c that are opposite each other may respectively abut against the two slot walls of the larger-capacity slot to achieve fixation.

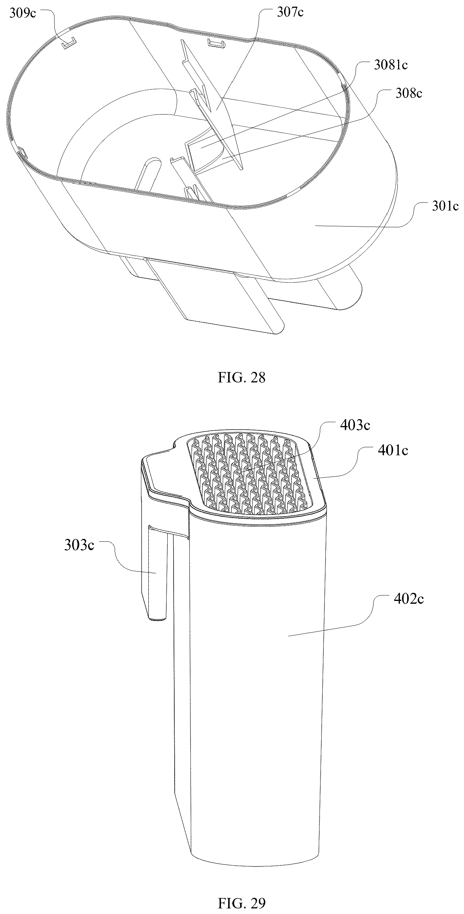

As shown in FIGS. 23 and 29, in order to optimize the above technical solution, the tool body may include a knife holder 400c. The knife holder 400c may include a top cover 401c and a holder body 402c. The top cover 401c may cover a top of the holder body 402c. A snap-fit member 403c may fill an interior of the top cover 401c. A knife may be snapped with the snap-fit member 403c. An outer wall of the top cover 401c may be arranged with a boss extending horizontally. The top of the holder body 402c may define with a mounting groove that is extending horizontally. When the top cover 401c covers the top of the holder body 402c, the boss may be mated with the mounting groove.

In some embodiments, a groove outer wall of the mounting groove may be arranged with the first insertion portion 303c that is parallel to the holder body 402c. The first insertion portion 303c and the holder body 402c may clamp the groove wall of the snap-fit groove 101c.

Specifically, the snap-fit member 403c may include, but not limited to, materials such as stainless steel or alloy steel, as long as the knife can be securely snapped thereto. In the present embodiment, a wavy-patterned silicone knife ring may be configured as the snap-fit member 403c. In this way, the snap-fit member 403c may be elastically deformable, such that knives of various sizes and configurations may be fitted therein. Furthermore, silicone may be light in weight and may have higher wear resistance and excellent corrosion resistance, and therefore, the snap-fit member 403c may be easily portable and used by the user.

Specifically, the reinforcing ribs may be arranged in the interior of the first insertion portion 303c to enhance structural strength and ensure sufficient support capability thereof.

Specifically, connection between the top cover 401c and the holder body 402c may the same as the connection between the first shell 301c and second shell 302c. That is, a plurality of latch holes may be defined in an outer wall of the top cover 401c, and a plurality of latches 309c may be arranged on an inner wall of the top of the holder body 402c. The plurality of latches 309c may be mated with the plurality of latch holes respectively (similar to the connection between the latches 309c of the first shell 301c and the latch holes in the second shell 302c). In this way, the top cover 401c may be connected to the holder body 402c to ensure connection stability of the knife holder 400c.

Specifically, mating between the boss and the mounting groove may further secure the connection between the top cover 401c and the holder body 402c, such that an overall structure of the knife holder 400c may be stabilized. In addition, configuration of the boss and the mounting groove may provide a space for arranging the first insertion portion 303c.

Specifically, the holder body 402c may be hollow, having an inner cavity to receive the knife. The holder body 402c may be cup-shaped or may have a penetration hole. When the holder body 402c has the penetration hole, a height of holder body 402c may match an average length of a cutting edge of knives commercially available in the market. In this way, the sharp edge of the hung knife may be isolated within the interior of the holder body 402c, enhancing protective performance of the knife holder 400c.

Specifically, the height of the first insertion portion 303c may be greater than the size of outdoor portable device in the z-axis direction, such that the first insertion portion 303c, when bearing weight of the knife, may not slip out of the snap-fit groove 101c, further enhancing the protective performance of the knife holder 400c.

Specifically, a distance between the first insertion portion 303c and the holder body 402c may be equal to a thickness of the groove wall of the snap-fit groove 101c. In this way, when the first insertion portion 303c snaps into the snap-fit groove 101c, the first insertion portion 303c and the holder body 402c properly clamp the groove wall of the snap-fit groove 101c.

While in use, the top cover 401c covers the top of the holder body 402c, the latch 309c may be snapped with the latch hole, and the protrusion may be mated with the mounting groove, such that connection of the knife holder 400c may be secured. A knife shank may be snapped to a top surface of the snap-fit member 403c, and a knife cutting edge may be received inside the holder body 402c. The first insertion portion 303c may be disposed within the snap-fit groove 101c, and the first insertion portion 303c and the holder body 402c may cooperatively clamp the groove wall of the snap-fit groove 101c. In this way, the knife holder 400c may be fixed to the outdoor portable device. According to the above configuration, the user may be provided with a convenient knife usage manner, meeting demands of knife usage during outdoor activities. By arranging the snap-fit member 403c and the protrusion/mounting groove, the knife holder 400c may be securely hung on outdoor portable device. The knife holder 400c enables the user to conveniently carry and use the knife, and application scenarios of the outdoor portable device may be expanded.

As shown in FIGS. 23, 30, and 31, in order to optimize the aforementioned technical solution, the tool body may include the fishing rod holder 500c. The fishing rod holder 500c may include a third shell 501c and a fourth shell 502c. The third shell 501c may be plate-shaped and fixedly connected to an outer wall of the fourth shell 502c. The first insertion portion 303c may be arranged at a top of the third shell 501c. The first insertion portion 303c may be connected to the third shell 501c. The snap-back portion 503c of the first insertion portion 303c may offset in a direction away from the third shell 501c and may extend toward the top of the first insertion portion 303c. The fourth shell 502c may be cylindrical, and a hanging slot 504c may be formed at a top of a side of the fourth shell 502c facing away from the third shell 501c. The hanging slot 504c may be configured to hang a head of a fishing rod. When the fishing rod holder 500c is snap-fitted into the snap-fit groove 101c, the first insertion portion 303c may be inserted into the snap-fit groove 101c.

Specifically, the third shell 501c may be fixedly connected to the outer wall of the fourth shell 502c via a fastener such as a screw, the third shell 501c and the fourth shell 502c may be connected to each other in a front-to-rear direction. The third shell 501c may be disposed near the outdoor portable device, and the fourth shell 502c may be disposed away from the outdoor portable device. The fourth shell 502c may define a threaded hole, and may be connected to the third shell 501c via the screw. Alternatively, a side of the fourth shell 502c near the third shell 501c may be arranged with a stud, and an internal threaded hole may be defined in the stud, such that the fourth shell 502c may be connected to the third shell 501c via the screw threaded with the threaded hole in the stud. Furthermore, the side of the fourth shell 502c near the third shell 501c may be arranged with a plurality of reinforcing ribs to enhance structural strength of the fourth shell 502c.

Specifically, the snap-back portion 503c may be snapped back with a groove bottom of the snap-fit groove 101c. In this way, an ability of the fishing rod holder 500c supporting the fishing rod may be improved, preventing the fishing rod from slipping out of the snap-fit groove 101c under any force. In this way, user experience and effectiveness of the fishing rod holder 500c may be improved.

While in use, the third shell 501c may be fixedly connected to the outer wall of the fourth shell 502c to form fixed connection. The first insertion portion 303c may be inserted into the snap-fit groove 101c until the snap-back portion 503c snaps upward and vertically to the groove bottom of the snap-fit groove 101c. In this way, stable connection between the fishing rod holder 500c and the hanging attachment member 100c may be achieved.

The first insertion portion 303c enables the fishing rod holder 500c to be securely mounted on the hanging attachment member 100c. The hanging slot 504c facilitates the user to conveniently store or retrieve the fishing rod. The outdoor portable device may be provided with a convenient fishing tool storage and retrieving manner. User demands for carrying the fishing rod during outdoor activities may be met, and application scenarios of the outdoor portable device may be expanded.

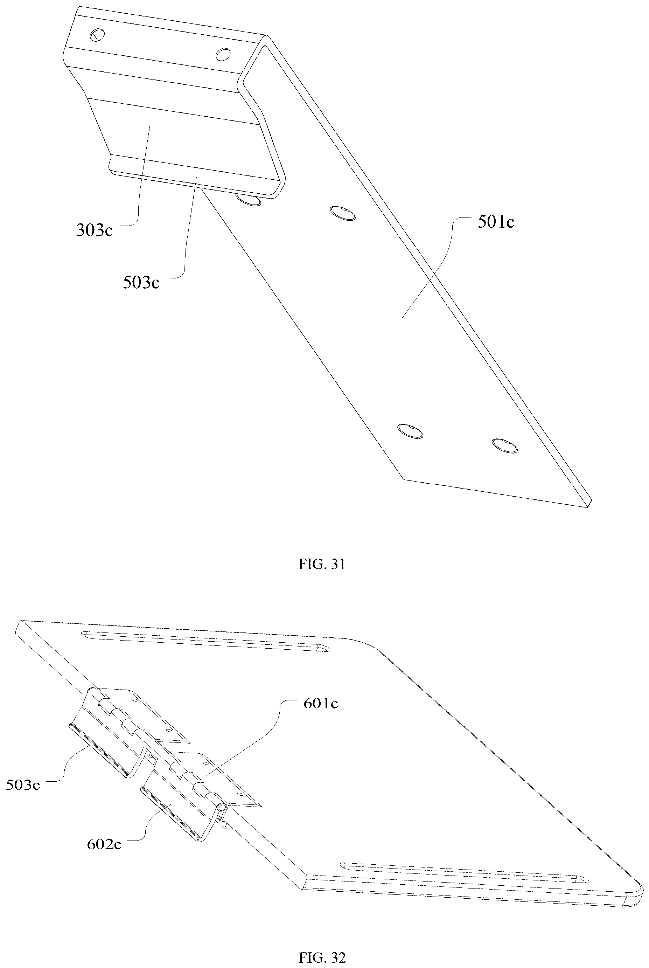

As shown in FIGS. 22 and 32, in order to optimize the above technical solution, the tool body may include a table plate 600c, and a fixing hole may be formed at an edge of the table plate 600c. The first hinge portion 601c may be connected to the fixing hole. When the table plate 600c is snapped into the snap-fit groove 101c, the second hinge portion 602c may be snapped into the snap-fit groove 101c.

Specifically, the first hinge portion 601c may be connected to a table body 601c, and the second hinge portion 602c may be mated with the snap-fit groove 101c. A rotation shaft may be disposed between the first hinge portion 601c and the second hinge portion 602c, and that is, the first hinge portion 601c and the second hinge portion 602c may rotate around the rotation shaft.

Specifically, the first hinge portion 601c and the second hinge portion 602c may rotate freely with respect to each other, and a maximum rotation angle therebetween may be 270°, such that mounting and usage requirements of the table plate 600c may be met.

Specifically, the fixing hole may be a threaded hole, and that is, the first hinge portion 601c may be connected to the edge of the table plate 600c via a fastener such as a screw.

Specifically, a table plate 600c may be arranged with a plurality of hinge members. In the present disclosure, two hinge members may be arranged and may be evenly distributed along a length side edge of the table plate 600c to enhance rotational stability.

Specifically, the second hinge portion 602c may be configured as the snap-back portion having the same configuration as first insertion portion 303c in the above, such that snapping stability with the snap-fit groove 101c may be improved.

While in use, the second hinge portion 602c may be snapped with the snap-fit groove 101c and may be snapped backward to secure the groove bottom. The table body 601c may rotate for 90° to be perpendicular to a side of the device. That is, the table plate 600c may be placed horizontally, enabling the user to perform tasks on the table plate 600c.

The second hinge portion 602c, when bearing a load, may be securely snapped backward with the bottom of the hanging attachment member 100c. Better load-bearing performance for placed items may be achieved, and the table plate 600c may be prevented from easily slipping out of the snap-fit groove 101c due to any force. By arranging the hinge member and the snap-fit groove 101c, the table plate 600c may be securely mounted on the hanging attachment member 100c, the user experience and effectiveness for placing items may be improved, and application scenarios of the outdoor portable device may be expanded.

The tool body may be easily mounted and removed from the hanging attachment member 100c, such that storage and packaging of the tool body may be easily performed. The tool body may be used more conveniently, and packaging costs may be reduced.

In summary, in the above embodiments, a multi-functional and user-friendly outdoor portable device is provided. By providing various combinations of the hanging attachment member 100c and the tool bodies, various demands for storage, water drinking, cutting, fishing, and rest during outdoor activities may be met, and application scenarios of the outdoor portable device may be expanded.

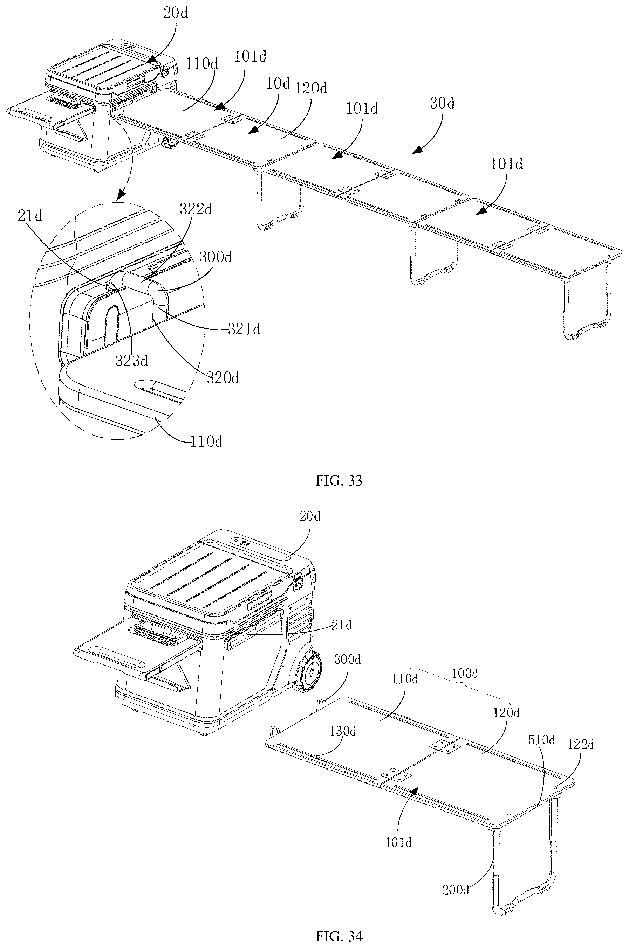

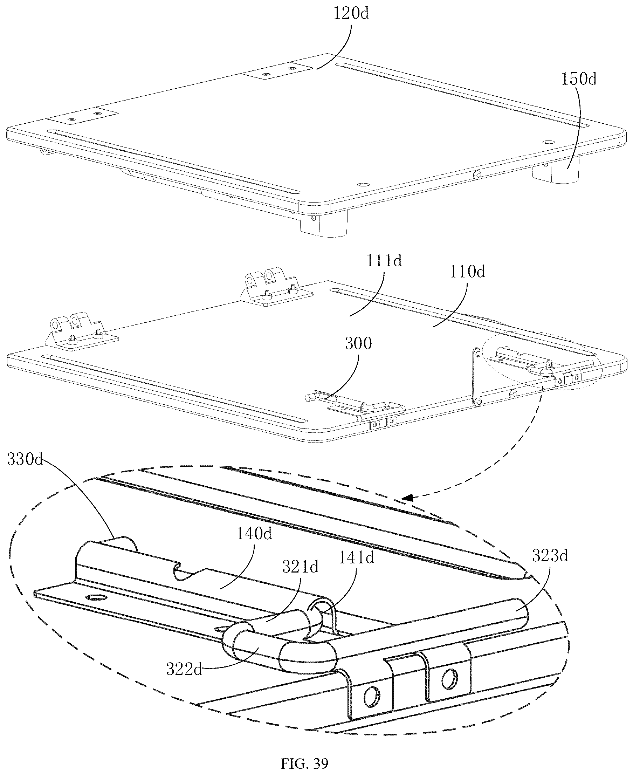

FIGS. 33-39 provide another embodiment of the portable device of the present disclosure.

As shown in FIGS. 33, 34, and 35, an outdoor portable table 10d may be provided and may be used in conjunction with the outdoor mobile device, such as the outdoor refrigerator 20d. The outer shell of the refrigerator 20d may define an insertion space 21d, and the insertion space 21d may be a hole or a slot. The outdoor portable table 10d may include a table unit 101d. The table unit 101d may include a support member 100d, a leg 200d, and a connection member 300d. The support member 100d may include a first table plate 110d and a second table plate 120d. The first table plate 110d may be disposed closer to the refrigerator 20d than the second table plate 120d is. The second table plate 120d may be movably connected to the first table plate 110d. For example, the second table plate 120d may be rotatably connected to an end of the first table plate 110d away from the outdoor mobile device. The second table plate 120d and the first table plate 110d may be rotatably connected to each other via a hinge or similar. Alternatively, the second table plate 120d may be slidably connected to the first table plate 110d. The second table plate 120d may be slidable with respect to the first table plate 110d along a direction perpendicular to a thickness direction of the first table plate 110d. The thickness direction of the first table plate 110d may be a direction perpendicular to a table surface thereof.

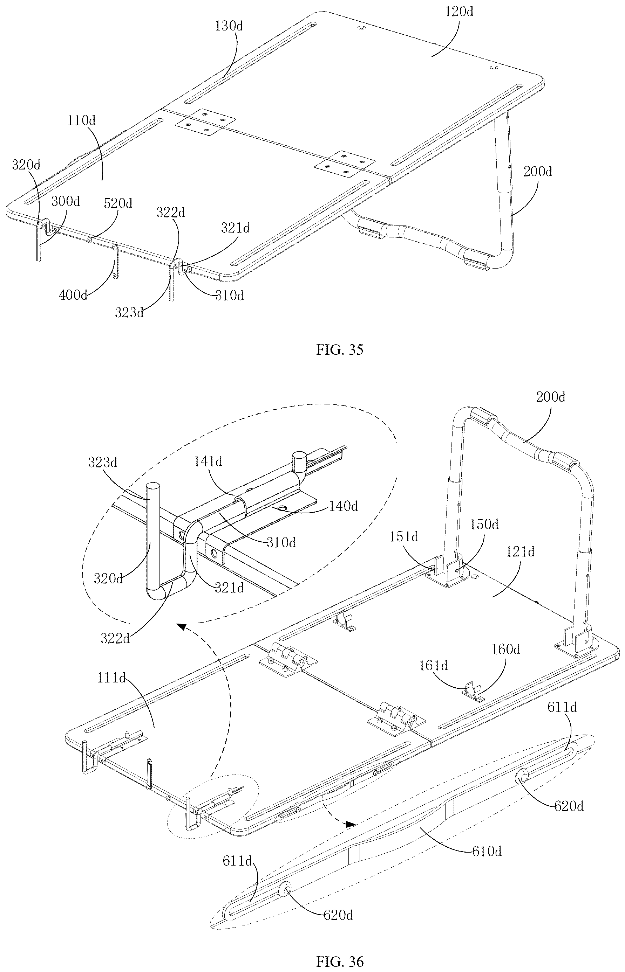

As shown in FIGS. 36, 37, and 38, during rotation, the first table plate 110d and the second table plate 120d may fold with respect to each other along the thickness direction of the first table plate 110d. The first table plate 110d and the second table plate 120d may be arranged on a same plane. In other words, the first table plate 110d and the second table plate 120d may be coplanar, and that is, the first table plate 110d and the second table plate 120d may be unfoldable relative to each other. The leg 200d may be rotatably connected to the second table plate 120d. During rotation, the leg 200d may be folded to be disposed on the second table plate 120d or may contact a support surface such as the ground, such that the leg may support the support member 100d. Alternatively, the leg 200d may be extendable and retractable. The retracted leg 200d may be folded to be disposed on the second table plate 120d. The connection member 300d may be movably mounted on the first table plate 110d and may be detachably connected with the refrigerator 20d. For example, the connection member 300d may be inserted into the insertion space 21d of the refrigerator 20d, such that the connection member 300d may be hung on the refrigerator 20d. In some embodiments, the connection member 300d may be detachably connected with the refrigerator 20d via snap-fit connection.

Since the connection member 300d is hung on the refrigerator 20d, the refrigerator 20d may support the first table plate 110d via the connection member 300d. Furthermore, the leg 200d may support the second table plate 120d. Therefore, the refrigerator 20d and the leg 200d cooperatively support the support member 100d. In this way, when the first table plate 110d and second table plate 120d are unfolded with respect to each other and when the refrigerator 20d and the leg 200d cooperatively support the support member 100d, the outdoor portable table 10d can be fully unfolded, and food may be placed on both the first table plate 110d and the second table plate 120d. In a case that the connection member 300d is detached from the refrigerator 20d, when the leg 200d is folded to be disposed on the second table plate 120d, and when the first table plate 110d and the second table plate 120d are folded with respect to each other, the outdoor portable table 10d may be in a fully folded state, such that a size of the outdoor portable table 10d may be reduced. In this way, storage, packaging, transportation, and carrying of the outdoor portable table 10d may be performed easily, such that usability of the outdoor portable table 10d may be improved. It should be understood that the refrigerator 20d supports the first table plate 110d via the connection member 300d, and that is, a support capability of the refrigerator 20d may be fully utilized, such that the number of legs 200d may be reduced, and manufacturing costs of the outdoor portable table 10d may be lowered.

As shown in FIGS. 35, 36, and 39, in some embodiments, the support member 100d further includes a first limiting member 140d. When the portable outdoor table 10d is in the fully unfolded state, the first table top 110d has a first rear surface 111d facing toward the support surface. It should be understood that a surface of the first table plate 110d facing away from the support surface may be a table surface that is used to hold food. The table surface and the first rear surface 111d are two surfaces facing opposite directions along the thickness direction of the first table plate 110d. The first limiting member 140d may be arranged on the first rear surface 111d. For example, the first limiting member 140d may be fixed to the first rear surface 111d via a bolt. A limiting hole 141d may be formed in the first limiting member 140d. The limiting hole 141d extends along an arrangement direction in which the first table plate 110d and the second table plate 120d are arranged when being unfolded with respect to each other. The limiting hole 141d may be in a clearance fit with the connection member 300d, such that the connection member 300d may be slidable and rotatable relative to the limiting hole 141d. The connection member 300d may be bent, and therefore, a central axis of the connection member 300d may be curved and may be located within one plane. When the plane on which the central axis of the connection member 300d is located is perpendicular to the first rear surface 111d, the connection member 300d may be inserted into the insertion space 21d. When the plane on which the central axis of the connection member 300d is located is parallel to the first rear surface 111d, the connection member 300d may be folded to be disposed on the first rear surface 111d.

As shown in FIGS. 35, 36, and 39, in some embodiments, the connection member 300d may include a mating section 310d and a hanging section 320d. The mating section 310d and the hanging section 320d are connected to each other, and an angle may be formed therebetween. The mating section 310d may be in a clearance fit with the limiting hole 141d. Since the mating section 310d may be rotatable and slidable relative to the limiting hole 141d, when the outdoor portable table 10d is in the fully unfolded state, the hanging section 320d may be disposed outside the first rear surface 111d, enabling the hanging section 320d to be inserted into the insertion space 21d. In this way, the entire connection member 300d may be hung on the refrigerator 20d. When the outdoor portable table 10d is in the fully folded state, the hanging section 320d may be fully folded to be disposed on the first rear surface 111d, enabling the entire hanging section 320d to be covered by the first rear surface 111d, preventing any portion of the hanging section 320d from extending beyond coverage of the first rear surface 111d. In this way, the size of the outdoor portable table 10d in the fully folded state may be further reduced, and the outdoor portable table 10d may be used more conveniently.

As shown in FIGS. 35, 36, and 39, in some embodiments, the connection member 300d further includes an abutting section 330d. The abutting section 330d may be connected to an end of the mating section 310d away from the hanging section 320d, and an angle may be formed between the abutting section 330d and the mating section 310d. For example, the abutting section 330d may be perpendicular to the mating section 310d. The hanging section 320d includes a first connection portion 321d, a second connection portion 322d, and a third connection portion 323d that are sequentially connected to each other. That is, two ends of the second connection portion 322d may be respectively connected to the first connection portion 321d and the third connection portion 323d, and that is, the second connection portion 322d being connected between the first connection portion 321d and the third connection portion 323d. An angle may be formed between the second connection portion 322d and the first connection portion 321d, and an angle may be formed between the second connection portion 322d and the third connection portion 323d. For example, the second connection portion 322d may be perpendicular to both the first connection portion 321d and the third connection portion 323d. In this way, the entire hanging portion 320d may be configured to be substantially U-shaped. The first connection portion 321d may be connected to the mating section 310d, and an angle may be formed between the first connection portion 321d and the mating section 310d. For example, the first connection portion 321d may be perpendicular to the mating section 310d, the second connection portion 322d may be parallel to the mating section 310d, and the third connection portion 323d may be inserted into the insertion space 21d. The third connection portion 323d, the first connection portion 321d, and the abutting section 330d may be in parallel to each other. When the outdoor portable table 10d is in the fully unfolded state, the abutting section 330d may be disposed out of the limiting hole 141d and abuts against an end of the first limiting member 140d. In this way, the hanging section 320d may be disposed out of the first rear surface 111d, enabling the third connection section 323d to be inserted into the insertion space 21d and enabling the second connection portion 322d to be disposed outside the insertion space 21d and to be supported on the refrigerator 20d. When the outdoor portable table 10d is in the fully folded state, the hanging portion 320d may be entirely folded to be disposed on the first rear surface 111d, and the first connection portion 321d may be disposed out of the limiting hole 141d and may abut against the other end of the first limiting member 140d.

As shown in FIGS. 35, 36, and 39, by arranging the abutting section 330d and the first connection portion, position limiting for the entire connection member 300d may be achieved better to prevent the connection member 300d from being disengaged from the limiting hole 141d and the entire first table plate 110d, such that the connection member 300d may not be stored separately or lost. It may be ensured that the connection member 300d remains on the first table plate 110d at all times. Furthermore, during the portable outdoor table 10d being transformed from the fully folded state to the fully unfolded state, when the mating section 310d slides relative to the limiting hole 141d until the abutting section 330d abuts against the first limiting member 140d, the hanging section 320d may be disposed outside the first rear surface 111d. Since a plane on which the hanging section 320d is located at this moment may be parallel to the first rear surface 111d, the mating section 310d may rotate for 90° relative to the limiting hole 141d. In this way, the plane on which the hanging section 320d is arranged may be perpendicular to the first rear surface 111d, facilitating the third connection portion 323d to be inserted into the insertion space 21d. During the portable outdoor table 10d being transformed from the fully unfolded state to the fully folded state, since the plane on which the hanging section 320d is arranged may be perpendicular to the first rear surface 111d, the mating section 310d may rotate for 90° relative to the limiting hole 141d. In this way, the plane on which the hanging section 320d is arranged may be parallel to the first rear surface 111d. Subsequently, the mating section 310d may slide relative to the limiting hole 141d until the first connection portion 321d abuts against the first limiting member 140d. In this way, the entire hanging section 320d may be folded to be disposed on the first rear surface 111d. Therefore, by enabling the abutting section 330d and the first connection portion 321d to respectively abut against the two ends of the first limiting member 140d, a position of the hanging section 320d relative to the first rear surface 111d may be effectively limited when the outdoor portable table 10d is in the fully unfolded state and in the fully folded state. Therefore, the outdoor portable table 10d may be used more conveniently.

In some embodiments, the connection member 300d may alternatively be a hook or the like, which may be fixedly connected to the first table plate 110d. Alternatively, the connection member 300d may be a three-dimensional structure, such that the central axis of the connection member 300d may be located in various planes.

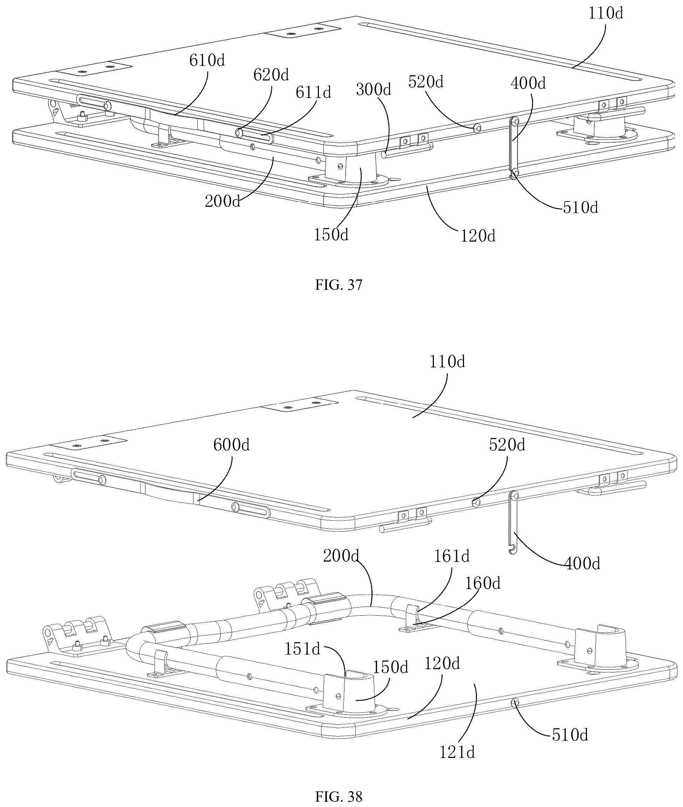

As shown in FIGS. 37 and 38, in some embodiments, the table unit 101d further includes a locking member 400d and a first fastener 510d. The locking member 400d may be rotatably connected to the first table plate 110d. Taking the outdoor portable table 10d in the fully unfolded state as a reference, an end of the locking member 400d may be rotatably connected to an end of the first table plate 110d away from the second table plate 120d. The first fastener 510d may be fixed to an end of the second table plate 120d away from the first table plate 110d. The first fastener 510d may be a screw, a pin, or the like. When the first table plate 110d and second table plate 120d are folded to each other, the other end of the locking member 400d may be fixedly connected to the second table plate 120d via the first fastener 510d. In this way, constraint for the first table plate 110d and the second table plate 120d may be effectively achieved, preventing relative rotation between the first table plate 110d and the second table plate 120d when the outdoor portable table 10d being in the fully folded state, such that stability and reliability of the outdoor portable table 10d when being in the fully folded state may be ensured.

As shown in FIGS. 37 and 38, in some embodiments, the table unit 101d further includes a second fastener 520d. The second fastener 520d may be a screw, a pin, or the like. Taking the outdoor portable table 10d being in the fully unfolded state as a reference, the second fastener 520d may be disposed at the end of the first table plate 110d away from the second table plate 120d. When the outdoor portable table 10d is in the fully unfolded state, the other end of the locking member 400d may be fixedly connected to the first table plate 110d via the second fastener 520d. In this way, two ends of the locking member 400d may be fixed, and the locking member 400d may be attached to the first table plate 110d. The other end of the locking member 400d may be prevented from forming a free end, such that the locking member 400d may not swing freely to cause interference to the refrigerator 20d or the user, and the outdoor portable table 10d may be used more conveniently.

As shown in FIGS. 36 and 38, in some embodiments, the support member 100d further includes a second limiting member 150d. When the outdoor portable table 10d is the fully unfolded state, the second table plate 120d has a second rear surface 121d facing toward the support surface. A surface of the second table plate 120d facing away from the support surface serves as a table surface of the second table plate 120d to support food. The table surface and the second rear surface 121d may be two surfaces facing opposite directions along the thickness direction of the second table plate 120d. The second limiting member 150d may be arranged on the second rear surface 121d. For example, the second limiting member 150d may be fixed to the second rear surface 121d via a bolt. A limiting slot 151d may be formed in the second limiting member 150d. The leg 200d may be rotatably connected to the second limiting member 150d, such that the leg 200d may be rotatably engaged with the limiting slot 151d. When the outdoor portable table 10d is in the fully unfolded state, the leg 200d rotates away from the second table plate 120d to reach an extreme position. That is, the leg 200d rotates away from the second table plate 120d until the angle between the leg 200d and the second table plate 120d reaches a maximum angle. At this moment, an inner groove wall of the limiting groove 151d abuts against the leg 200d, such that rotation of the leg 200d may be effectively limited, ensuring effective bearing support to be provided for the second table plate 120d. When the portable outdoor table 10d needs to be transformed from the fully unfolded state to the fully folded state, firstly, the leg 200d may be rotated towards the second table plate 120d. A slot opening of the limiting slot 151d may reserve a space for the rotation, preventing interference applied by the second limiting member 150d on the leg 200d while the leg is moving closer to the second table plate 120d. When the leg 200d contacts the second table plate 120d and is folded to be disposed on the second rear surface 121d, the leg 200d and the second table plate 120d are folded with respect to each other. At this moment, the first table plate 110d and the second table plate 120d may be rotated to reach a mutually folded position, enabling the leg 200d to be disposed between the first table plate 110d and the second table plate 120d. Therefore, the leg 200d may fully utilizes the space between the first table plate 110d and the second table plate 120d, such that the size of the outdoor portable table 10d, when being fully folded, may be reduced, and the outdoor portable table 10d may be used more conveniently. When the first table plate 110d and the second table plate 120d are folded to each other, the second limiting member 150d abuts against the first table plate 110d. In this way, the limiting member may effectively limit the rotation of the first table plate 110d toward the second table plate 120d. When the portable outdoor table 10d is in the fully folded state, the plane on which the first table plate 110d is arranged may be substantially parallel to the plane on which the second table plate 120d is arranged.

As shown in FIGS. 36 and 38, in some embodiments, the support member 100d further includes a snapping member 160d. The snapping member may be fixed to the second rear surface 121d via a bolt. The snapping member 160d may define a snapping slot 161d. When the leg 200d is folded to be disposed on the second rear surface 121d, the snapping slot 161d may be in a tight fit with the leg 200d, and that is, a detachable snapping connection may be formed between the snapping slot 161d and the leg 200d. Therefore, when the outdoor portable table 10d is fully folded, the snapping member 160d may effectively fix the leg 200d, preventing the leg 200d from oscillating slightly to impact the first table plate 110d and second table plate 120d and to generate noise. Therefore, the outdoor portable table 10d may be transported comfortably.

As shown in FIGS. 34 and 35, in some embodiments, an elongated mounting slot 130d may be formed in the table surface of the first table plate 110d and/or the table surface of the second table plate 120d. For example, the elongated mounting slot 130d may be formed in each of the table surface of the first table plate 110d and the table surface of the second table plate 120d. The mounting slot 130d may be a through slot that penetrates the first table plate 110d and the second table plate 120d in the thickness direction thereof. That is, the mounting slot 130d has two openings respectively on the first rear surface 111d and the second rear surface 121d. By defining the mounting slot 130d, various items may be inserted or hung in the mounting slot 130d, such that more functions of the outdoor portable table 10d may be achieved.

As shown in FIGS. 33 and 34, in some embodiments, the second table plate 120d may define a through hole 122d. The through hole 122d penetrates the second table plate 120d in the thickness direction. Therefore, the through hole 122d has two openings respectively on the table surface and the second rear surface 121d of the second table plate 120d. Taking the outdoor portable table 10d being in the fully unfolded state as a reference, the through hole 122d is defined near the end of the second table plate 120d that is away from the first table plate 110d. When the outdoor portable table 10d includes a plurality of table units 101, the plurality of table units may be interconnected to each other to increase a total surface area of the table. For two adjacent ones of the plurality of table units 101 of the outdoor portable table 10d, by arranging the through hole 122d, the connection member 300d of one of the two adjacent table units 101 may be inserted into the through hole 122d of the other one of the two adjacent table unit 101d. That is, the third connection portion 323d of the connection member 300d may be inserted into the through hole 122d. In this way, the adjacent two table units 101 may be connected to each other. Therefore, by arranging the through hole 122d and the connection member 300d, the plurality of table units 101 of the outdoor portable table 10d may be connected to each other according to practical demands. In some embodiments, the through hole 122d may be replaced with a through slot.

As shown in FIGS. 36 and 37, in some embodiments, the outdoor portable table 10d further includes a handle 610d mounted on a lateral side surface of either the first table plate 110d or the second table plate 120d. By arranging the handle 610d, the user may carry the outdoor portable table 10d when the outdoor portable table 10d is in the fully folded state, such that the outdoor portable table 10d may be used more conveniently.

As shown in FIGS. 36 and 37, for example, the outdoor portable table 10d further includes a positioning member 620d. In some embodiments, two positioning member 620d may be arranged. The handle 610d may be substantially elongated and may define two slide grooves 611d. Each of the two positioning members 620d may correspond to a respective one of the two slide grooves 611d. The two slide grooves 611d may be respectively disposed at two opposite ends of the handle 610d. Each of the positioning member 620d may be inserted into the handle 610d and the respective one of the two slide grooves 611d. The positioning member 620d may be slidably in the slide groove 611d. The positioning member 620d may be fixedly connected to either the first table plate 110d or the second table plate 120d. The handle 610d may be connected to either the first table plate 110d or the second table plate 120d via the positioning member 620d. In this way, the handle 610d may be prevented from detaching from either the first table plate 110d or the second table plate 120d. During the positioning member 620d sliding relative to the slide groove 611d, the positioning member 620d may abut against either of two opposite ends of the slide groove 611d. For example, when a pulling force applied to the handle 610d is released, one of the two positioning members 620d may abut against an end of the respective one of the two slide grooves 611d closest to the other one of the two slide grooves 611d, and the other one of the two positioning members 620d may abut against an end of the other respective one of the two slide grooves 611d closest to the one of the two slide grooves 611d. In this way, the handle 610d may be attached to either first table plate 110d or second table plate 120d, preventing the handle 610d from protruding out of either the first table plate 110d or the second table plate 120d to cause interference. When the pulling force is applied to the handle 610d, the one of the two positioning members 620d may abut against the other end of the respective one of the two slide grooves 611d furthest away from the other one of the two slide grooves 611d, and the other one of the two positioning members 620d may abut against the other end of the other respective one of the two slide grooves 611d furthest away from the one of the two slide grooves 611d. In this way, sufficient clearance space may be formed between the handle 610d and either the first table plate 110d or second table plate 120d, facilitating the user to grip the handle 610d. The outdoor portable table 10d may be used more conveniently.

As shown in FIGS. 33 and 34, in some embodiments, the present disclosure may further provide an outdoor device 30d. The outdoor device 30d may include an outdoor mobile unit and the outdoor portable table 10d. The outdoor mobile unit may be the portable refrigerator 20d, which defines the insertion space 21d. The connection member 300d may be configured to be mated with the insertion space 21d to enable the connection member 300d to be detachably connected with the refrigerator 20d.

Technical features described in the above embodiments may be combined to each other in any manner. For brevity, not all possible combinations of the technical features in the above embodiments are described. However, any combination of the technical features that does not cause a conflict shall be considered within the scope of the present disclosure.

## Claims

1. An outdoor portable device, comprising:
a device body;
a wheel assembly, connected to the device body and configured to drive the device body to move; and
an external attachment assembly, mounted at an exterior of the device body and connected to the device body, wherein, the external attachment assembly is configured to hold at least one outdoor tool.

2. The outdoor portable device according to claim 1, wherein,
the wheel assembly comprises a first wheel (200a) and a second wheel (300a);
the first wheel (200a) comprises a first wheel hub (201a), a connection member (202a), and a first tire (203a), wherein at least one first mounting hole is defined in the first wheel hub (201a);
the second wheel (300a) comprises a second wheel hub (301a) and a second tire (307a), wherein the second tire (307a) sleeves an exterior of the second wheel hub (301a), and at least one second mounting hole is defined in the second wheel hub (301a); the at least one first mounting hole is in one-to-one correspondence to the at least one second mounting hole;
the connection member (202a) detachably connects the first wheel hub (201a) to the second wheel hub (301a) via the at least one first mounting hole and the at least one second mounting hole; when the first wheel hub (201a) and the second wheel hub (301a) are connected to each other, the first tire (203a) is configured to contact the ground; when the first wheel hub (201a) is detached from the second wheel hub (301a), the second tire (307a) is configured to contact the ground;
the first tire (203a) is sleeved on an exterior of the first wheel hub (201a), a diameter of the first tire (203a) is greater than a diameter of the second tire (307a), a ground contact area of the first tire (203a) is larger than a ground contact area of the second tire (307a).

3. The outdoor portable device according to claim 2, wherein, the connection member (202a) comprises a captive screw, the captive screw comprises a threaded end and a smooth shaft end; a hole side wall of each of the at least one first mounting hole is arranged with threads, a hole side wall of the second mounting hole is arranged with an embedded nut, the threaded end is engaged with the threads and the embedded nut, and the smooth shaft end is connected to a handle (208a).

4. The outdoor portable device according to claim 3, wherein, the at least one first mounting hole in the first wheel (200a) comprises three first mounting holes; the at least one second mounting hole in the second wheel (300a) comprises three second mounting holes; the connection member (202a) comprises three captive screws; the first wheel hub (201a) and the second wheel hub (301a) are detachably connected to each other via the three first mounting holes, the three second mounting holes, and the three captive screws;
the three first mounting holes are distributed to form an equilateral triangle, a center of the equilateral triangle coincides with an axial center of the first wheel hub (201a), and a depth of each of the three first mounting holes extends along an axial direction of the first wheel hub (201a); the three second mounting holes are distributed to form another equilateral triangle, a center of the another equilateral triangle coincides with an axial center of the second wheel hub (301a); a depth of each of the three second mounting holes extends along an axial direction of the second wheel hub (301a).

5. The outdoor portable device according to any one of claims 2 to 4, wherein at least one first insertion portion (205a) is arranged on a side of the first wheel hub (201a) near the second wheel hub (301a), and at least one second insertion portion (304a) is arranged on a side of the second wheel hub (301a) near the first wheel hub (201a), the first insertion portion (205a) and the second insertion portion (304a) are connected to each other are detachably engaged with each other.

6. The outdoor portable device according to claim 5, wherein, the side of the first wheel hub (201a) near the second wheel hub (301a) defines a plurality of grooves (206a); the at least one first insertion portion (205a) is disposed within a same one of the plurality of grooves (206a); the first insertion portion (205a) protrudes from a groove bottom of the groove (206a); the side of the second wheel hub (301a) near the first wheel hub (201a) is arranged with a plurality of partition ribs extending along an axial direction of the second wheel hub (301a); the second insertion portion (304a) is a cavity enclosed by the plurality of partition ribs.

7. The outdoor portable device according to any one of claims 1 to 6, wherein, the external attachment assembly comprises a hanging attachment member (100c) connected to an outer side wall of the device body; the hanging attachment member (100c) is arranged with a hanging attachment portion; a length of the hanging attachment portion extends horizontally; the hanging attachment member (100c) is configured to receive the at least one outdoor tool via the hanging attachment portion; the hanging attachment portion comprises at least one of: a snap-fit groove (101c) and a through hole (102c).

8. The outdoor portable device according to claim 7, wherein,
the hanging attachment portion comprises a plurality of snap-fit grooves (101c), the plurality of snap-fit grooves (101c) are spaced apart from each other and are distributed along a length direction of the hanging attachment portion; or
the hanging attachment portion comprises a plurality of through holes (102c); the plurality of through holes (102c) are spaced apart from each other and are distributed along a length direction of the hanging attachment portion; or
the hanging attachment portion comprises a plurality of the snap-fit grooves (101c) and a plurality of the through holes (102c), the plurality of snap-fit grooves (101c) and the plurality of through holes (102c) are spaced apart from each other and are distributed along a length direction of the hanging attachment portion.

9. The outdoor portable device according to claim 7, wherein, the outer side wall of the device body defines a receiving slot; a length direction of the receiving slot extends along a longitudinal axis of the device body, a width direction of the receiving slot extends perpendicularly to the length direction and in parallel to a plane on which the outer side wall of the device body is located, and a depth direction of the receiving slot extends perpendicularly to both the length direction and the width direction and extends towards an interior of the device body; the receiving slot is configured to receive the hanging attachment member (100c).

10. The outdoor portable device according to any one of claims 1 to 9, wherein, the external attachment assembly comprises a portable table (10d) that is detachably connected to the device body; the portable table (10d) comprises a table unit (101d), the table unit (101d) comprises:
a support member (100d), comprising a first table plate (110d) and a second table plate (120d), wherein the first table plate (110d) is disposed closer to the device body than the second table plate (120d) is, and the second table plate (120d) is movably connected to the first table plate (110d) to enable the first table plate (110d) and the second table plate (120d) to be foldable with respect to each other or to be unfolded with respect to each other to be arranged coplanar with each other;
a leg (200d), connected to the second table plate (120d) and being capable of being folded to be disposed onto the second table plate (120d), wherein the leg (200d) is configured to contact a support surface; and
a connection member (300d), movably mounted on the first table plate (110d) and detachably connected to the device body.

11. The outdoor portable device according to claim 10, wherein, the support member (100d) further comprises a first limiting member (140d) fixed to a first rear surface (111d) of the first table plate (110d) facing the support surface; the first limiting member (140d) defines a limiting hole (141d) that is configured to be in a clearance fit with the connection member (300d), the limiting hole (141d) extends along a direction in which the first table plate (110d) and the second table plate (120d) are arranged when the portable table (10d) in unfolded.

12. The outdoor portable device according to claim 11, wherein, when a plane on which a central axis of the connection member (300d) is arranged is perpendicular to the first rear surface (111d), the connection member (300d) is inserted into the insertion space (21d) formed in an outer shell of the device body; when the plane on which the central axis of the connection member (300d) is arranged is parallel to the first rear surface (111d), the connection member (300d) is folded to be disposed on the first rear surface (111d).

13. The outdoor portable device according to any one of claims 1 to 12, wherein, the device body comprises:
a body portion (11b), wherein a freezing chamber (101b) is formed in an interior of the body portion (11b);
a foldable storage basket (12b), comprising a side frame assembly (100b) and a bottom frame (200b), wherein the foldable storage basket (12b) is disposed within the freezing chamber (101b), and the bottom frame (200b) and the side frame assembly (100b) cooperatively define an open cavity (130b);
wherein the side frame assembly (100b) comprises at least two side frames; the two side frames are movable between an expanded position and a collapsed position; at the expanded position, the open cavity (130b) is expanded in size to enable the foldable storage basket (12b) to be unfolded; and at the collapsed position, the open cavity (130b) is reduced in size to enable the foldable storage basket (12b) to be folded.

14. The outdoor portable device according to claim 13, wherein, the bottom frame (200b) is rotatably mounted on the side frame assembly (100b); the bottom frame (200b) is movable towards the side frame assembly (100b) to enable the foldable storage basket (12b) to be stored; and the bottom frame (200b) is movable away from the side frame assembly (100b) to enable the foldable storage basket (12b) to be unfolded for storing items.

15. The outdoor portable device according to claim 14, wherein, the side frame assembly (100b) comprises four side frames, the four side frames are two first side frames (110b) and two second side frames (120b), the two first side frames (110b) are spaced apart from each other along a first direction, and the two second side frames (120b) are spaced apart from each other along a second direction; two ends of the two second side frames (120b) along the first direction are respectively rotatably connected to the two first side frames (110b) via a rotation shaft extending along a third direction; an angle is formed between the first direction and the second direction, the first direction and the second direction are both perpendicular to the third direction;
the bottom frame (200b) is rotatably connected to one of the two first side frames (110b) via a rotation shaft extending along the second direction, and the bottom frame (200b) is supported along the third direction on the two second side frames (120b) and/or the other one of the two first side frames (110b);
the bottom frame (200b) is capable of being stacked with the two first side frames (110b), the two first side frames (110b) are capable of moving apart from each other or moving towards each other, and the two second side frames(120b) are capable of moving apart from each other or moving towards each other.
